# EUROPEAN PATENT APPLICATION

(11) **EP 4 576 693 A1**
(43) Date of publication of application: **25.06.2025**
(21) Application number: 22955770.7
(22) Date of filing: 19.08.2022
(51) Int. Cl.: H04L 27/26

(54) **TERMINAL, WIRELESS COMMUNICATION METHOD, AND BASE STATION**

(71) Applicant: NTT DOCOMO, INC., Tokyo 100-6150 (JP)
(72) Inventor: MATSUMURA, Yuki, Tokyo 100-6150 (JP); NAGATA, Satoshi, Tokyo 100-6150 (JP); WANG, Jing, Beijing 100190 (CN)
(74) Representative: Hoffmann Eitle
(86) International application number: PCT/JP2022/031432
(87) International publication number: WO 2024/038598

(57) **Abstract**

A terminal according to an aspect of the present disclosure includes a receiving section that receives downlink control information (DCI) for scheduling an uplink shared channel, and a control section that, when a maximum length of a demodulation reference signal (DMRS) for the uplink shared channel is 1, determines a combination of five or more ports for the DMRS, based on an antenna port field of the DCI. According to an aspect of the present disclosure, it is possible to appropriately perform communication with more than 4 layers, based on a single-symbol DMRS.

## Description

### Technical Field

The present disclosure relates to a terminal, a radio communication method, and a base station in next-generation mobile communication systems.

### Background Art

In a Universal Mobile Telecommunications System (UMTS) network, the specifications of Long-Term Evolution (LTE) have been drafted for the purpose of further increasing high speed data rates, providing lower latency and so on (see Non-Patent Literature 1). In addition, for the purpose of further high capacity, advancement and the like of the LTE (Third Generation Partnership Project (3GPP (registered trademark)) Release (Rel.) 8 and Rel. 9), the specifications of LTE-Advanced (3GPP Rel. 10 to Rel. 14) have been drafted.

Successor systems of LTE (for example, also referred to as "5th generation mobile communication system (5G)," "5G+ (plus)," "6th generation mobile communication system (6G)," "New Radio **(NR),"** "3GPP Rel. 15 (or later **versions),"** and so on) are also under study.

### Citation List

### Non-Patent Literature

Non-Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)," April, 2010

### Summary of Invention

### Technical Problem

For future radio communication systems (for example, Rel-18 NR), a demodulation reference signal (DMRS) port for an uplink shared channel (Physical Uplink Shared Channel (PUSCH)) capable of supporting more than 4 layers is under study. For Rel-18 NR, an increased number of orthogonal DMRS ports for a PUSCH / downlink shared channel (Physical Downlink Shared Channel (PDSCH)) is under study. Such a new DMRS port different from an existing DMRS port (also referred to as a Rel-15 DMRS port) is also referred to as a Rel-18 DMRS port.

It is studied that a PUSCH/PDSCH with more than 4 layers is performed by using a double-symbol DMRS. However, the double-symbol DMRS has large DMRS-related communication overhead. Thus, frequently using the double-symbol DMRS may suppress increase in an amount of data capable of being transmitted (communication throughput) / system throughput.

In view of this, an object of the present disclosure is to provide a terminal, a radio communication method, and a base station that can appropriately perform communication with more than 4 layers, based on a single-symbol DMRS.

### Solution to Problem

A terminal according to an aspect of the present disclosure includes a receiving section that receives downlink control information (DCI) for scheduling an uplink shared channel, and a control section that, when a maximum length of a demodulation reference signal (DMRS) for the uplink shared channel is 1, determines a combination of five or more ports for the DMRS, based on an antenna port field of the DCI.

### Advantageous Effects of Invention

According to an aspect of the present disclosure, it is possible to appropriately perform communication with more than 4 layers, based on a single-symbol DMRS.

### Brief Description of Drawings

[FIG. 1] FIG. 1 is a diagram to show an example of a parameter for a PDSCH DMRS.
[FIG. 2] FIG. 2 is a diagram to show an example of a parameter for a PUSCH DMRS.
[FIG. 3] FIGS. 3A to 3D are diagrams to show examples of an antenna port table to be referred to in a case where a transform precoder in Rel. 15 is disabled, a DMRS type = 1, and a maximum DMRS length = 1.
[FIG. 4] FIGS. 4A to 4D are diagrams to show examples of an antenna port table to be referred to in a case where a transform precoder in Rel. 15 is disabled, a DMRS type = 1, and a maximum DMRS length = 2.
[FIG. 5] FIGS. 5A to 5D are diagrams to show examples of an antenna port table to be referred to in a case where a transform precoder in Rel. 15 is disabled, a DMRS type = 2, and a maximum DMRS length = 1.
[FIG. 6] FIGS. 6A and 6B are diagrams to show examples of an antenna port table to be referred to in a case where a transform precoder in Rel. 15 is disabled, a DMRS type = 2, and a maximum DMRS length = 2.
[FIG. 7] FIGS. 7A and 7B are diagrams to show examples of an antenna port table to be referred to in a case where a transform precoder in Rel. 15 is disabled, a DMRS type = 2, and a maximum DMRS length = 2.
[FIG. 8] FIGS. 8A to 8D are diagrams to show examples of an antenna port table to be referred to in a case where a transform precoder is disabled, a DMRS type = 1, and a maximum DMRS length = 2.
[FIG. 9] FIGS. 9A and 9B are diagrams to show examples of an antenna port table to be referred to in a case where a transform precoder is disabled, a DMRS type = 2, and a maximum DMRS length = 1.
[FIG. 10] FIGS. 10A to 10D are diagrams to show examples of an antenna port table to be referred to in a case where a transform precoder is disabled, a DMRS type = 2, and a maximum DMRS length = 2.
[FIG. 11] FIG. 11 is a diagram to show an example of parameters for DMRS configuration type 1 for a Rel-18 DMRS.
[FIG. 12] FIG. 12 is a diagram to show an example of parameters for DMRS configuration type 2 for a Rel-18 DMRS.
[FIG. 13] FIG. 13 is a diagram to show an example of parameters for DMRS configuration type 1 for a Rel-18 DMRS.
[FIG. 14] FIG. 14 is a diagram to show an example of parameters for DMRS configuration type 2 for a Rel-18 DMRS.
[FIG. 15] FIG. 15 is a diagram to show an example of an antenna port indication table to be referred to in a case where a transform precoder is disabled, a DMRS type = 1, a maximum DMRS length = 1, and a rank = 5, according to a first embodiment.
[FIG. 16] FIG. 16 is a diagram to show an example of an antenna port indication table to be referred to in a case where a transform precoder is disabled, a DMRS type = 1, a maximum DMRS length = 1, and a rank = 6, according to the first embodiment.
[FIG. 17] FIG. 17 is a diagram to show an example of an antenna port indication table to be referred to in a case where a transform precoder is disabled, a DMRS type = 1, a maximum DMRS length = 1, and a rank = 7, according to the first embodiment.
[FIG. 18] FIG. 18 is a diagram to show an example of an antenna port indication table to be referred to in a case where a transform precoder is disabled, a DMRS type = 1, a maximum DMRS length = 1, and a rank = 8, according to the first embodiment.
[FIG. 19] FIG. 19 is a diagram to show an example of an antenna port indication table to be referred to in a case where a transform precoder is disabled, a DMRS type = 2, a maximum DMRS length = 1, and a rank = 5, according to the first embodiment.
[FIG. 20] FIG. 20 is a diagram to show an example of an antenna port indication table to be referred to in a case where a transform precoder is disabled, a DMRS type = 2, a maximum DMRS length = 1, and a rank = 6, according to the first embodiment.
[FIG. 21] FIG. 21 is a diagram to show an example of an antenna port indication table to be referred to in a case where a transform precoder is disabled, a DMRS type = 2, a maximum DMRS length = 1, and a rank = 7, according to the first embodiment.
[FIG. 22] FIG. 22 is a diagram to show an example of an antenna port indication table to be referred to in a case where a transform precoder is disabled, a DMRS type = 2, a maximum DMRS length = 1, and a rank = 8, according to the first embodiment.
[FIG. 23] FIG. 23 is a diagram to show an example of an antenna port indication table to be referred to in a case where a DMRS type = 1 and a maximum DMRS length = 1, according to a second embodiment.
[FIG. 24] FIG. 24 is a diagram to show an example of an antenna port indication table to be referred to in a case where a DMRS type = 1 and a maximum DMRS length = 1, according to the second embodiment.
[FIG. 25] FIG. 25 is a diagram to show an example of an antenna port indication table to be referred to in a case where a DMRS type = 2 and a maximum DMRS length = 1, according to the second embodiment.
[FIG. 26] FIG. 26 is a diagram to show an example of an antenna port indication table to be referred to in a case where a DMRS type = 2 and a maximum DMRS length = 1, according to the second embodiment.
[FIG. 27] FIG. 27 is a diagram to show an example of a schematic structure of a radio communication system according to one embodiment.
[FIG. 28] FIG. 28 is a diagram to show an example of a structure of a base station according to one embodiment.
[FIG. 29] FIG. 29 is a diagram to show an example of a structure of a user terminal according to one embodiment.
[FIG. 30] FIG. 30 is a diagram to show an example of a hardware structure of the base station and the user terminal according to one embodiment.
[FIG. 31] FIG. 31 is a diagram to show an example of a vehicle according to one embodiment.

### Description of Embodiments

### (Control of Transmissions of SRS and PUSCH)

In Rel-15 NR, a terminal (user terminal, User Equipment (UE)) may receive information to be used for transmission of a reference signal for measurement (for example, sounding reference signal (SRS)) (SRS configuration information, for example, a parameter in an RRC control element "SRS-Config").

Specifically, the UE may receive at least one of information related to one or a plurality of SRS resource sets (SRS resource set information, for example, an RRC control element "SRS-ResourceSet") and information related to one or a plurality of SRS resources (SRS resource information, for example an RRC control element "SRS-Resource").

One SRS resource set may be associated with a given number of SRS resources (may group the given number of SRS resources together). Each SRS resource may be identified by an SRS resource indicator (SRI) or an SRS resource ID (Identifier).

The SRS resource set information may include an SRS resource set ID (SRS-ResourceSetId), a list of SRS resource IDs (SRS-ResourceId) used in the resource set, an SRS resource type, and information of SRS usage.

Here, the SRS resource type may indicate one of a periodic SRS (P-SRS), a semi-persistent SRS (SP-SRS), and aperiodic CSI (Aperiodic SRS (A-SRS)). Note that the UE may periodically (or, after activation, periodically) transmit the P-SRS and the SP-SRS, and may transmit the A-SRS, based on an SRS request of downlink control information (DCI).

The usage (RRC parameter "usage," L1 (Layer-1) parameter "SRS-SetUse") may be, for example, beam management (beamManagement), codebook (CB), non-codebook (nonCodebook (NCB)), antenna switching, or the like. An SRS with codebook or non-codebook usage may be used to determine a precoder for codebook based or non-codebook based uplink shared channel (Physical Uplink Shared Channel (PUSCH)) transmission based on an SRI.

For example, in a case of codebook based transmission, the UE may determine a precoder (precoding matrix) for the PUSCH transmission, based on an SRI, a transmission rank (which may be simply referred to as a rank), and a transmitted precoding matrix indicator (TPMI). In a case of non-codebook based transmission, the UE may determine a precoder for the PUSCH transmission, based on an SRI.

The SRS resource information may include an SRS resource ID (SRS-ResourceId), the number of SRS ports, an SRS port number, a transmission Comb, SRS resource mapping (for example, a time and/or frequency resource location, resource offset, a resource periodicity, the number of repetitions, the number of SRS symbols, an SRS bandwidth, or the like), hopping-related information, an SRS resource type, a sequence ID, SRS spatial relation information, and the like.

The SRS spatial relation information (for example, an RRC information element "spatialRelationInfo") may indicate information on a spatial relation between a given reference signal and an SRS. The given reference signal may be at least one of a synchronization signal / broadcast channel (Synchronization Signal / Physical Broadcast Channel (SS/PBCH)) block, a channel state information reference signal (CSI-RS), and an SRS (for example, another SRS). The SS/PBCH block may be referred to as a synchronization signal block (SSB).

The SRS spatial relation information may include, as an index of the above-described given reference signal, at least one of an SSB index, a CSI-RS resource ID, and an SRS resource ID.

Note that, in the present disclosure, an SSB index, an SSB resource ID, and an SSB Resource Indicator (SSBRI) may be interchangeably interpreted. A CSI-RS index, a CSI-RS resource ID, and a CSI-RS Resource Indicator (CRI) may be interchangeably interpreted. An SRS index, an SRS resource ID, and an SRI may be interchangeably interpreted.

The SRS spatial relation information may include a serving cell index, a BWP index (BWP ID), and the like corresponding to the above-described given reference signal.

Regarding a given SRS resource, when spatial relation information related to an SSB or CSI-RS and an SRS is configured, the UE may transmit the SRS resource by using the same spatial domain filter (spatial domain transmission filter) as a spatial domain filter (spatial domain reception filter) for reception of the SSB or CSI-RS. In this case, the UE may assume that a UE receive beam of the SSB or CSI-RS and a UE transmit beam of the SRS are the same.

Regarding a given SRS (target SRS) resource, when spatial relation information related to another SRS (reference SRS) and the SRS (target SRS) is configured, the UE may transmit the target SRS resource by using the same spatial domain filter (spatial domain transmission filter) as a spatial domain filter (spatial domain transmission filter) for transmission of the reference SRS. In other words, in this case, the UE may assume that a UE transmit beam of the reference SRS and a UE transmit beam of the target SRS are the same.

The UE may determine, based on a value of a given field (for example, an SRS resource indicator (SRI) field) in DCI (for example, DCI format 0_1), a spatial relation for a PUSCH scheduled by the DCI. Specifically, the UE may use, for PUSCH transmission, spatial relation information (for example, an RRC information element "spatialRelationInfo") for an SRS resource determined based on the value of the given field (for example, the SRI).

In Rel-15/16 NR, when codebook based transmission is used for the PUSCH, the UE may be configured with an SRS resource set for codebook usage including up to two SRS resources, by RRC, and one of the up to two SRS resources may be indicated for the UE by DCI (1-bit SRI field). A transmit beam for the PUSCH is indicated by the SRI field.

The UE may judge a TPMI and the number of layers (transmission rank) for the PUSCH, based on a precoding information and number of layers field (also referred to hereinafter as a precoding information field). The UE may select, based on the TPMI, the number of layers, and the like described above, a precoder from an uplink codebook for the same number of ports as the number of SRS ports indicated by a higher layer parameter "nrofSRS-Ports" configured for an SRS resource indicated by the above-described SRI field.

In Rel-15/16 NR, when non-codebook based transmission is used for the PUSCH, the UE may be configured with an SRS resource set for non-codebook usage including up to four SRS resources, by RRC, and one or more of the up to four SRS resources may be indicated for the UE by DCI (2-bit SRI field).

The UE may determine the number of layers (transmission rank) for the PUSCH, based on the above-described SRI field. For example, the UE may judge that the number of SRS resources indicated by the SRI field is the same as the number of layers for the PUSCH. The UE may compute a precoder for the above-described SRS resource.

When a CSI-RS associated with the SRS resource (or SRS resource set to which the SRS resource belongs) (which may be referred to as an associated CSI-RS) is configured in a higher layer, a transmit beam for the PUSCH may be computed based on (measurement of) the configured associated CSI-RS. Otherwise, a transmit beam for the PUSCH may be indicated by an SRI.

Note that the UE may be configured with whether to use codebook based PUSCH transmission or non-codebook based PUSCH transmission, by a higher layer parameter "txConfig" indicating a transmission scheme. The parameter may indicate a value of "codebook" or "non-codebook **(nonCodebook)."**

In the present disclosure, a codebook based PUSCH (codebook based PUSCH transmission, codebook based transmission) may mean a PUSCH in a case where the UE is configured with "codebook" as a transmission scheme. In the present disclosure, a non-codebook based PUSCH (non-codebook based PUSCH transmission, non-codebook based transmission) may mean a PUSCH in a case where the UE is configured with "non-codebook" as a transmission scheme.

### (DMRS)

A front-loaded DMRS is the first DMRS (in the first symbol or a symbol near the first symbol) for faster demodulation. An additional DMRS can be configured by RRC for a high speed moving UE or a high modulation and coding scheme (MCS) / rank. A frequency location of the additional DMRS is the same as that of the front-loaded DMRS.

DMRS mapping type A or B is configured for a time domain. In DMRS mapping type A, DMRS location l_0 is counted by a symbol index in a slot. l_0 is configured by a parameter (dmrs-TypeA-Position) in an MIB or a common serving cell configuration (ServingCellConfigCommon). DMRS location 0 (reference point l) means the first symbol of the slot or each frequency hop. In DMRS mapping type B, DMRS location l_0 is counted by a symbol index in a PDSCH/PUSCH. l_0 is always 0. DMRS location 0 (reference point l) means the first symbol of the PDSCH/PUSCH or each frequency hop.

The DMRS location is defined by a table in a specification, and depends on duration of the PDSCH/PUSCH. The location of the additional DMRS is fixed.

(PDSCH/PUSCH) DMRS configuration type 1 or type 2 is configured for a frequency domain. DMRS configuration type 1 includes a comb structure, and is applicable to both cyclic prefix orthogonal frequency division multiplexing (CP-OFDM) and Discrete Fourier Transform Spread OFDM (DFT-s-OFDM). DMRS configuration type 2 is applicable to only CP-OFDM.

Note that CP-OFDM may be used when transform precoding (which may be referred to as a transform precoder) is configured to be disabled (parameter for the transform precoder (for example, transformPrecoder) = "disabled"). DFT-s-OFDM may be used when a transform precoder is configured to be enabled (parameter for the transform precoder (for example, transformPrecoder) = "enabled").

A single-symbol DMRS or a double-symbol DMRS may be configured for the UE.

The single-symbol DMRS is normally used (is mandatory in Rel. 15). In the single-symbol DMRS, the number of additional DMRSs (symbols) is {0, 1, 2, 3}. The single-symbol DMRS supports both a case of enabled frequency hopping and a case of disabled frequency hopping. The single-symbol DMRS is used if a maximum length (maxLength) in uplink DMRS configuration (DMRS-UplinkConfig) is not configured.

A double-symbol DMRS is used for more DMRS ports (especially for MU-MIMO). In the double-symbol DMRS, the number of additional DMRSs (symbols) is {0, 1}. The double-symbol DMRS supports a case of disabled frequency hopping. If the maximum length (maxLength) in the uplink DMRS configuration (DMRS-UplinkConfig) is 2 (len2), which of the single-symbol DMRS or the double-symbol DMRS is to be used is determined by DCI or a configured grant.

Thus, as possible DMRS configuration patterns, the following combinations are conceivable.
- DMRS configuration type 1, DMRS mapping type A, single-symbol DMRS
- DMRS configuration type 1, DMRS mapping type A, double-symbol DMRS
- DMRS configuration type 1, DMRS mapping type B, single-symbol DMRS
- DMRS configuration type 1, DMRS mapping type B, double-symbol DMRS
- DMRS configuration type 2, DMRS mapping type A, single-symbol DMRS
- DMRS configuration type 2, DMRS mapping type A, double-symbol DMRS
- DMRS configuration type 2, DMRS mapping type B, single-symbol DMRS
- DMRS configuration type 2, DMRS mapping type B, double-symbol DMRS

A plurality of DMRS ports mapped to the same RE (time and frequency resources) may be referred to as a DMRS code division multiplexing (CDM) group.

For DMRS configuration type 1 and the single-symbol DMRS, four DMRS ports can be used. In each DMRS CDM group, two DMRS ports are multiplexed by an FD OCC having a length of 2. In a plurality of DMRS CDM groups (two DMRS CDM groups), two DMRS ports are multiplexed by FDM.

For DMRS configuration type 1 and the double-symbol DMRS, eight DMRS ports can be used. In each DMRS CDM group, two DMRS ports are multiplexed by an FD OCC having a length of 2, and two DMRS ports are multiplexed by a TD OCC. In a plurality of DMRS CDM groups (two DMRS CDM groups), two DMRS ports are multiplexed by FDM.

For DMRS configuration type 2 and the single-symbol DMRS, six DMRS ports can be used. In each DMRS CDM group, two DMRS ports are multiplexed by an FD OCC having a length of 2. In a plurality of DMRS CDM groups (three DMRS CDM groups), three DMRS ports are multiplexed by FDM.

For DMRS configuration type 2 and the double-symbol DMRS, twelve DMRS ports can be used. In each DMRS CDM group, two DMRS ports are multiplexed by an FD OCC having a length of 2, and two DMRS ports are multiplexed by a TD OCC. In a plurality of DMRS CDM groups (three DMRS CDM groups), three DMRS ports are multiplexed by FDM.

An example of DMRS mapping type B is described here, but the same applies to DMRS mapping type A.

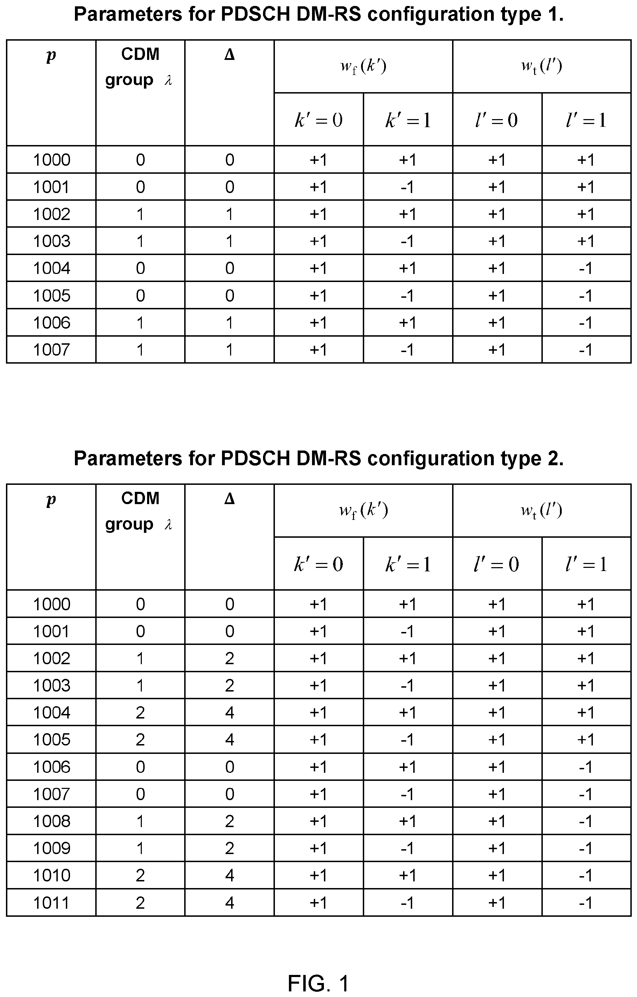

FIG. 1 is a diagram to show an example of a parameter for a PDSCH DMRS. DMRS ports 1000 to 1007 and DMRS ports 1000 to 1011 can be used for DMRS configuration type 1 and DMRS configuration type 2, respectively.

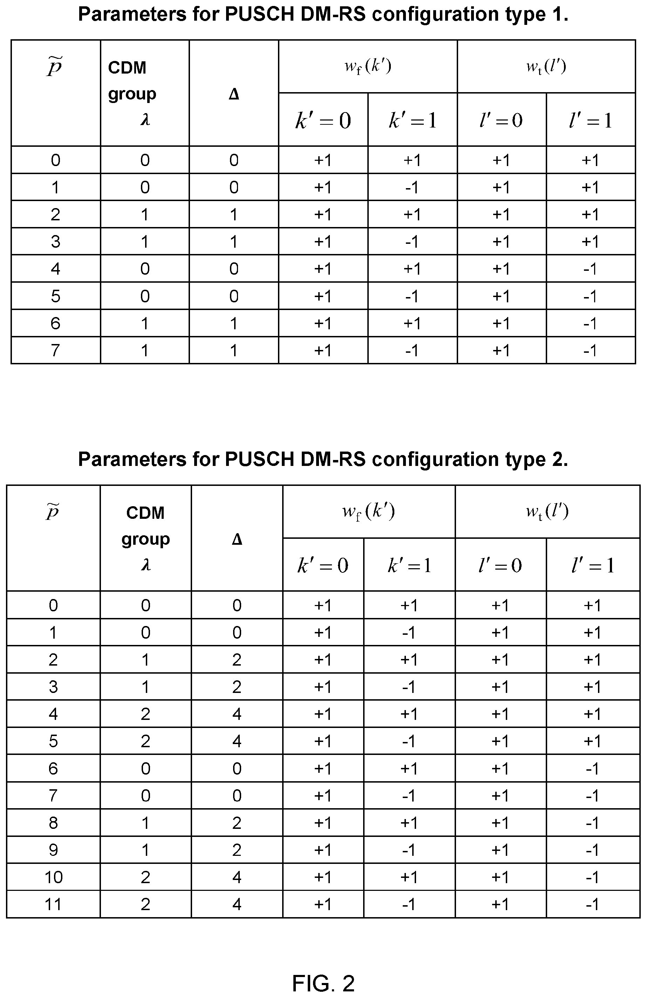

FIG. 2 is a diagram to show an example of a parameter for a PUSCH DMRS. DMRS ports 0 to 7 and DMRS ports 0 to 11 can be used for DMRS configuration type 1 and DMRS configuration type 2, respectively.

### (Reference Signal Port)

For orthogonalization of a MIMO layer, and the like, reference signals (for example, demodulation reference signals (DMRSs), CSI-RSs) with a plurality of ports are used.

For example, for single user MIMO (SU-MIMO), different DMRS ports / CSI-RS ports may be configured for each layer. For multi user MIMO (MU-MIMO), different DMRS ports / CSI-RS ports may be configured for each layer in one UE and for each UE.

Note that it is expected that using the number of CSI-RS ports greater than the number of layers used for data enables more accurate channel state measurement based on this CSI-RS, thereby contributing to throughput enhancement.

In Rel-15 NR, for DMRSs with a plurality of ports, up to 8 ports and up to 12 ports are supported in a case of type 1 DMRSs (in other words, DMRS configuration type 1) and a case of type 2 DMRSs (in other words, DMRS configuration type 2), respectively, by using frequency division multiplexing (FDM), a frequency domain orthogonal cover code (FD-OCC), a time domain OCC (TD-OCC), and the like.

In Rel-15 NR, as the above-described FDM, a comb-shaped transmission frequency pattern (comb-shaped resource set) is used. As the above-described FD-OCC, a cyclic shift (CS) is used. The above-described TD-OCC can be applied only to the double-symbol DMRS.

An OCC in the present disclosure may be interchangeably interpreted as an orthogonal code, orthogonalization, a cyclic shift, and the like.

Note that a DMRS type may be referred to as a DMRS configuration type.

A DMRS to which resource mapping in units of two consecutive (adjacent) symbols is applied, from among DMRSs, may be referred to as a double-symbol DMRS, and a DMRS to which resource mapping in units of one symbol is applied, from among DMRSs, may be referred to as a single-symbol DMRS.

Both of the DMRSs may be mapped to one or more symbols per slot, depending on a length of a data channel. A DMRS mapped to a start location of a data symbol may be referred to as a front-loaded DMRS, and a DMRS additionally mapped to a location other than the location may be referred to as an additional DMRS.

In a case of DMRS configuration type 1 and a single-symbol DMRS, a Comb and a CS may be used for orthogonalization. For example, up to four antenna ports (APs) may be supported by using two types of Comb and two types of CS (Comb2+2CS).

In a case of DMRS configuration type 1 and a double-symbol DMRS, a Comb, a CS, and a TD-OCC may be used for orthogonalization. For example, up to eight APs may be supported by using two types of Comb, two types of CS, and a TD-OCC ({1, 1} and {1, -1}).

In a case of DMRS configuration type 2 and a single-symbol DMRS, an FD-OCC may be used for orthogonalization. For example, up to six APs may be supported by applying an orthogonal code (2-FD-OCC) to two resource elements (REs) adjacent to each other in a frequency direction.

In a case of DMRS configuration type 2 and a double-symbol DMRS, an FD-OCC and a TD-OCC may be used for orthogonalization. For example, up to 12 APs may be supported by applying an orthogonal code (2-FD-OCC) to 2 REs adjacent to each other in a frequency direction and applying a TD-OCC ({1, 1} and {1, -1}) to 2 REs adjacent to each other in a time direction.

In Rel-15 NR, for CSI-RSs with a plurality of ports, up to 32 ports are supported by using FDM, time division multiplexing (TDM), a frequency domain OCC, a time domain OCC, and the like. The same method as that for the above-described DMRS may also be applied to orthogonalization of the CSI-RS.

Incidentally, a DMRS port group orthogonalized by such an FD-OCC/TD-OCC as that described above is also referred to as a code division multiplexing (CDM) group.

Different CDM groups are FDMed, and thus are orthogonal to each other. On the other hand, there is a case where in the same CDM group, orthogonality of an applied OCC collapses due to channel variation or the like. In this case, receiving signals in the same CDM group with different received powers may cause the near-far problem, thereby preventing orthogonality from being assured.

Here, a TD-OCC/FD-OCC for a DMRS of Rel-15 NR will be described. A DMRS mapped to a resource element (RE) may correspond to a sequence obtained by multiplying a DMRS sequence by a parameter (which may be referred to as a sequence element or the like) w_{f}(k') for an FD-OCC and a parameter (which may be referred to as a sequence element or the like) wₜ(l') for a TD-OCC.

Both of the TD-OCC and FD-OCC for the DMRS of Rel-15 NR correspond to an OCC of a sequence length (which may be referred to as an OCC length) = 2. Thus, respective possible values of k' and l' described above are both 0 and 1. Multiplying this FD-OCC in units of an RE enables DMRSs with two ports to be multiplexed by using the same time and frequency resources (2 REs). Applying both of these FD-OCC and TD-OCC enables DMRSs with four ports to be multiplexed by using the same time and frequency resources (4 REs).

Two existing DMRS port tables for PDSCH shown in FIG. 1 correspond to respective DMRS configuration types 1 and 2. Note that p and Δ indicate an antenna port number and a parameter for shifting (offsetting) a frequency resource, respectively.

For example, {w_{f}(0), w_{f}(1)} = {+1, +1} and {w_{f}(0), w_{f}(1)} = {+1, -1} are applied to antenna ports 1000 and 1001, respectively, thereby orthogonalizing the antenna ports by using an FD-OCC.

Δ of different values are applied to antenna ports 1000 to 1001 and antenna ports 1002 to 1003 (and antenna ports 1004 to 1005 in a case of type 2), thereby applying FDM to the antenna ports. Accordingly, antenna ports 1000 to 1003 (or 1000 to 1005) corresponding to a single-symbol DMRS are orthogonalized by using an FD-OCC and FDM.

{wₜ(0), wₜ(1)} = {+1, +1} and {wₜ(0), wₜ(1)} = {+1, -1} are applied to antenna ports 1000 to 1003 and antenna ports 1004 to 1007 of type 1, respectively, thereby orthogonalizing the antenna ports by using a TD-OCC. Accordingly, antenna ports 1000 to 1007 (or 1000 to 1011) corresponding to a double-symbol DMRS are orthogonalized by using an FD-OCC, a TD-OCC, and FDM.

For only CP-OFDM, it is studied that a larger number of orthogonal DMRS ports for DL/UL MU-MIMO is defined (without increasing DMRS overhead), that a common design is applied to DL and UL DMRSs, that up to 24 orthogonal DMRS ports are applied, and that for each applicable DMRS configuration type, a maximum number of orthogonal DMRS ports is doubled for both a single-symbol DMRS and a double-symbol DMRS.

In Rel. 15, Cases 1 to 4 below can be configured.

### {Case 1} Single-symbol DMRS of DMRS configuration type 1

A total number of DMRS ports is 2 (with comb/FDM) x 2 (with FD OCC) = 4 ports.

### {Case 2} Double-symbol DMRS of DMRS configuration type 1

A total number of DMRS ports is 2 (with comb/FDM) x 2 (with FD OCC) x 2 (with TD OCC) = 8 ports.

### {Case 3} Single-symbol DMRS of DMRS configuration type 2

A total number of DMRS ports is 3 (with FDM) x 2 (with FD OCC) = 6 ports.

### {Case 4} Double-symbol DMRS of DMRS configuration type 2

A total number of DMRS ports is 3 (with comb) x 2 (with FD OCC) x 2 (with TD OCC) = 12 ports.

In each of Cases 1 to 4 in Rel. 15, mapping between CDM groups and DMRS port indices is as follows.

### {Case 1}

Four ports and two CDM groups may be available. For a PUSCH, CDM group #0 and CDM group #1 may correspond to DMRS port indices {0, 1} and DMRS port indices {2, 3}, respectively. For a PDSCH, CDM group #0 and CDM group #1 may correspond to DMRS port indices {1000, 1001} and DMRS port indices {1002, 1003}, respectively.

### {Case 2}

Eight ports and two CDM groups may be available. For a PUSCH, CDM group #0 and CDM group #1 may correspond to DMRS port indices {0, 1, 4, 5} and DMRS port indices {2, 3, 6, 7}, respectively. For a PDSCH, CDM group #0 and CDM group #1 may correspond to DMRS port indices {1000, 1001, 1004, 1005} and DMRS port indices {1002, 1003, 1006, 1007}, respectively.

### {Case 3}

Six ports and three CDM groups may be available. For a PUSCH, CDM group #0, CDM group #1, and CDM group #2 may correspond to DMRS port indices {0, 1}, DMRS port indices {2, 3}, and DMRS port indices {4, 5}, respectively. For a PDSCH, CDM group #0, CDM group #1, and CDM group #2 may correspond to DMRS port indices {1000, 1001}, DMRS port indices {1002, 1003}, and DMRS port indices {1004, 1005}, respectively.

### {Case 4}

Twelve ports and three CDM groups may be available. For a PUSCH, CDM group #0, CDM group #1, and CDM group #2 may correspond to DMRS port indices {0, 1, 6, 7}, DMRS port indices {2, 3, 8, 9}, and DMRS port indices {4, 5, 10, 11}, respectively. For a PDSCH, CDM group #0, CDM group #1, and CDM group #2 may correspond to DMRS port indices {1000, 1001, 1006, 1007}, DMRS port indices {1002, 1003, 1008, 1009}, and DMRS port indices {1004, 1005, 1010, 1011}, respectively.

### <Table of Antenna Ports in Rel. 15>

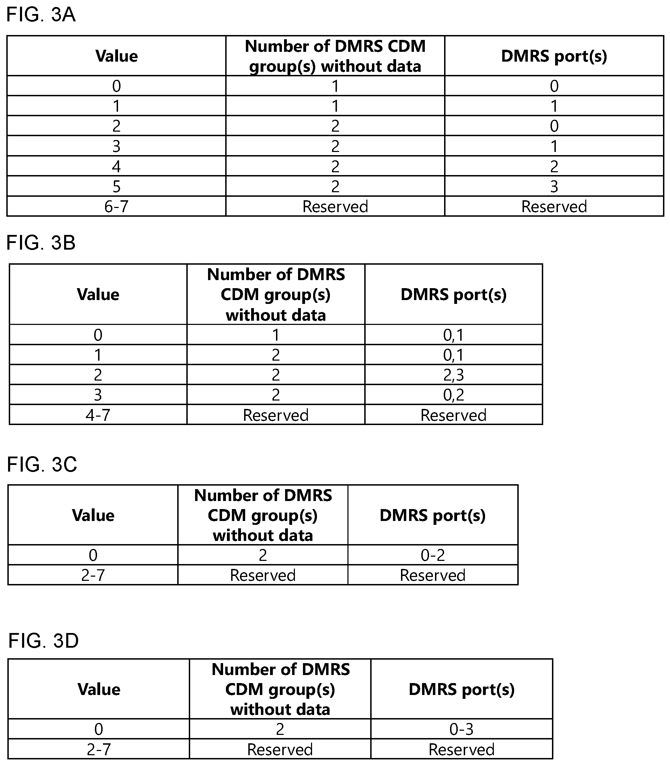

FIGS. 3A to 3D are diagrams to show examples of an antenna port table to be referred to in a case where a transform precoder in Rel. 15 is disabled, a DMRS type = 1, and a maximum DMRS length = 1.

FIG. 3A is an example of the antenna port table corresponding to rank 1. In the present example, different DMRS port sets (number of antenna ports "1") are associated with values of 0 to 5 of an antenna port field ("Antenna ports" field).

FIG. 3B is an example of the antenna port table corresponding to rank 2. In the present example, different DMRS port sets (number of antenna ports "2") are associated with values of 0 to 3 of the antenna port field.

FIG. 3C is an example of the antenna port table corresponding to rank 3. In the present example, different DMRS port sets (number of antenna ports "3") are associated with a value of 0 of the antenna port field.

FIG. 3D is an example of the antenna port table corresponding to rank 4. In the present example, different DMRS port sets (number of antenna ports "4") are associated with a value of 0 of the antenna port field.

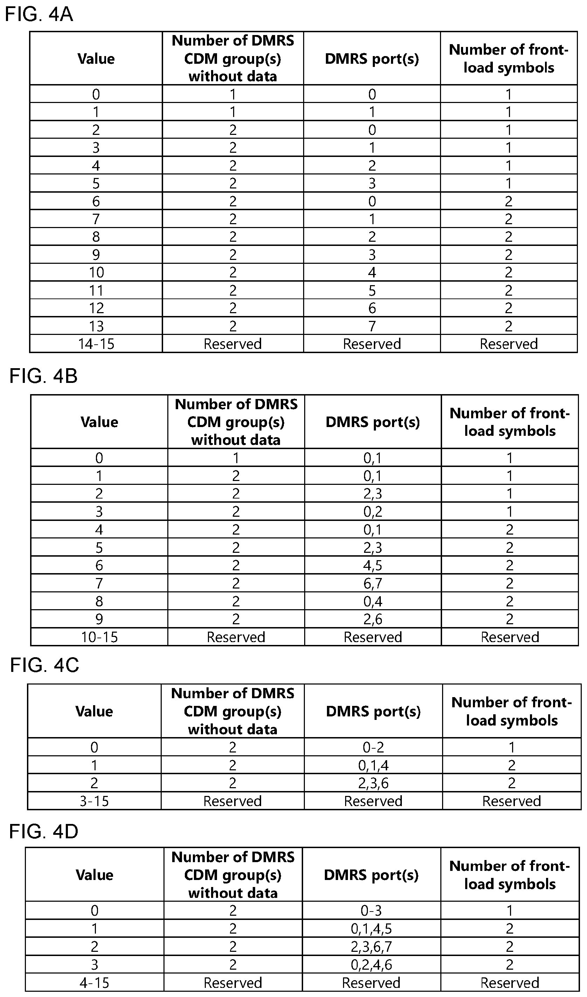

FIGS. 4A to 4D are diagrams to show examples of an antenna port table to be referred to in a case where a transform precoder in Rel. 15 is disabled, a DMRS type = 1, and a maximum DMRS length = 2.

FIG. 4A is an example of the antenna port table corresponding to rank 1. In the present example, different DMRS port sets (number of antenna ports "1") are associated with values of 0 to 13 of an antenna port field. Note that the correspondence between the values and details of the entries is not limited to this. The same applies to another example.

FIG. 4B is an example of the antenna port table corresponding to rank 2. In the present example, different DMRS port sets (number of antenna ports "2") are associated with values of 0 to 9 of the antenna port field.

FIG. 4C is an example of the antenna port table corresponding to rank 3. In the present example, different DMRS port sets (number of antenna ports "3") are associated with values of 0 to 2 of the antenna port field.

FIG. 4D is an example of the antenna port table corresponding to rank 4. In the present example, different DMRS port sets (number of antenna ports "4") are associated with values of 0 to 3 of the antenna port field.

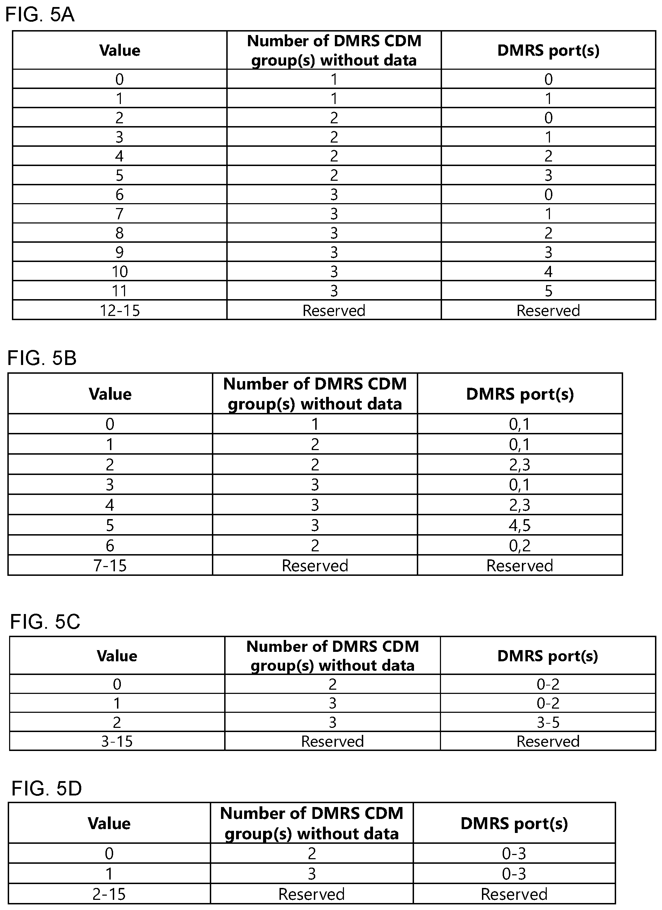

FIGS. 5A to 5D are diagrams to show examples of an antenna port table to be referred to in a case where a transform precoder in Rel. 15 is disabled, a DMRS type = 2, and a maximum DMRS length = 1.

FIG. 5A is an example of the antenna port table corresponding to rank 1. In the present example, different DMRS port sets (number of antenna ports "1") are associated with values of 0 to 11 of an antenna port field. Note that the correspondence between the values and details of the entries is not limited to this. The same applies to another example.

FIG. 5B is an example of the antenna port table corresponding to rank 2. In the present example, different DMRS port sets (number of antenna ports "2") are associated with values of 0 to 6 of the antenna port field.

FIG. 5C is an example of the antenna port table corresponding to rank 3. In the present example, different DMRS port sets (number of antenna ports "3") are associated with values of 0 to 2 of the antenna port field.

FIG. 5D is an example of the antenna port table corresponding to rank 4. In the present example, different DMRS port sets (number of antenna ports "4") are associated with values of 0 to 1 of the antenna port field.

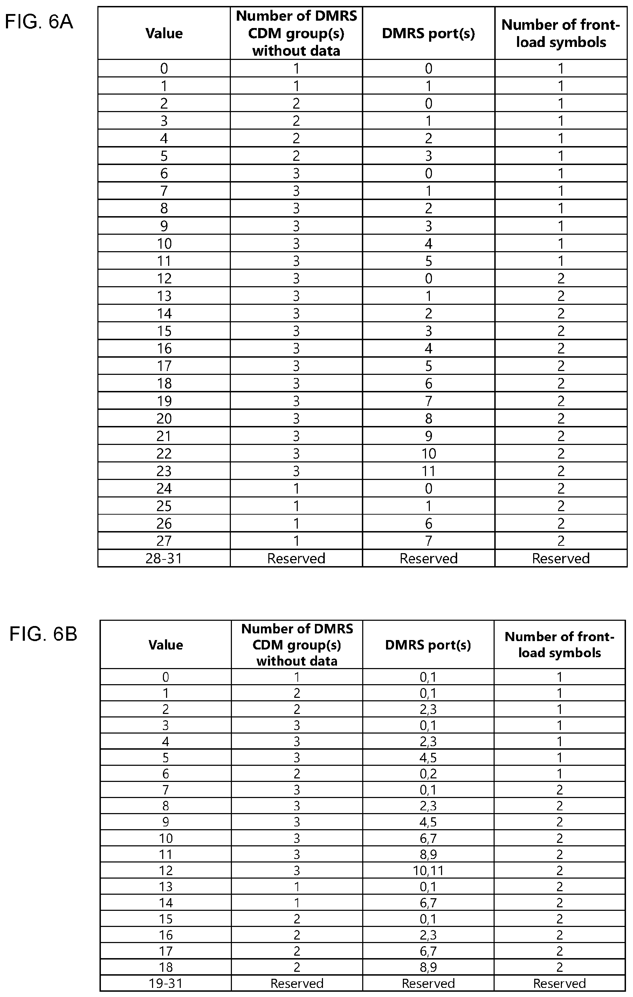

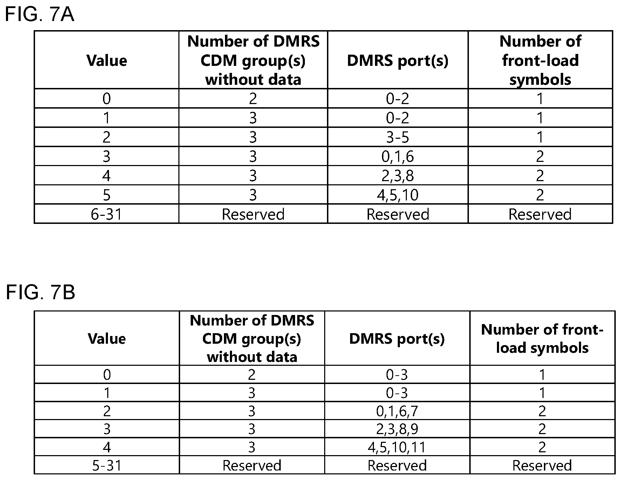

FIGS. 6A, 6B, 7A, and 7B are diagrams to show examples of an antenna port table to be referred to in a case where a transform precoder in Rel. 15 is disabled, a DMRS type = 2, and a maximum DMRS length = 2.

FIG. 6A is an example of the antenna port table corresponding to rank 1. In the present example, different DMRS port sets (number of antenna ports "1") are associated with values of 0 to 27 of an antenna port field.

FIG. 6B is an example of the antenna port table corresponding to rank 2. In the present example, different DMRS port sets (number of antenna ports "2") are associated with values of 0 to 18 of the antenna port field.

FIG. 7A is an example of the antenna port table corresponding to rank 3. In the present example, different DMRS port sets (number of antenna ports "3") are associated with values of 0 to 5 of the antenna port field.

FIG. 7B is an example of the antenna port table corresponding to rank 4. In the present example, different DMRS port sets (number of antenna ports "4") are associated with values of 0 to 4 of the antenna port field.

### <DMRS Port(s) With More Than 4 Layers>

An example of an antenna port table for indication of DMRS ports with more than 4 layers in a case where a transform precoder is disabled will be described.

For a codebook based PUSCH, the UE determines a rank (number of layers) for PUSCH transmission, based on a precoding information field of DCI. For a non-codebook based PUSCH, the UE determines a rank (number of layers) for PUSCH transmission, based on an SRS resource indicator field of the DCI.

The UE may judge an antenna port table corresponding to the determined rank, based on enabling/disabling of a transform precoder, a DMRS type for PUSCH configured by higher layer signaling (which may be configured by an RRC parameter "dmrs-Type"), and a value of a maximum DMRS length (which may be configured by an RRC parameter "maxLength").

An entry (which corresponds to a set of the number of CDM groups without data, a DMRS antenna port index, the number of front-loaded symbols ("Number of front-load symbols"), and the like) of the table to be referred to may be determined, depending on a value of an antenna port field of the DCI.

### {Case Where DMRS Type = 1 and Maximum DMRS Length = 1}

In a case where a DMRS type = 1 and a maximum DMRS length = 1, transmission with up to rank 4 may be supported. In other words, the UE configured with the DMRS type = 1 and the maximum DMRS length = 1 may not support transmission with a rank higher than rank 4.

### {Case Where DMRS Type = 1 and Maximum DMRS Length = 2}

In a case where the DMRS type = 1 and the maximum DMRS length = 2, transmission with up to rank 8 may be supported.

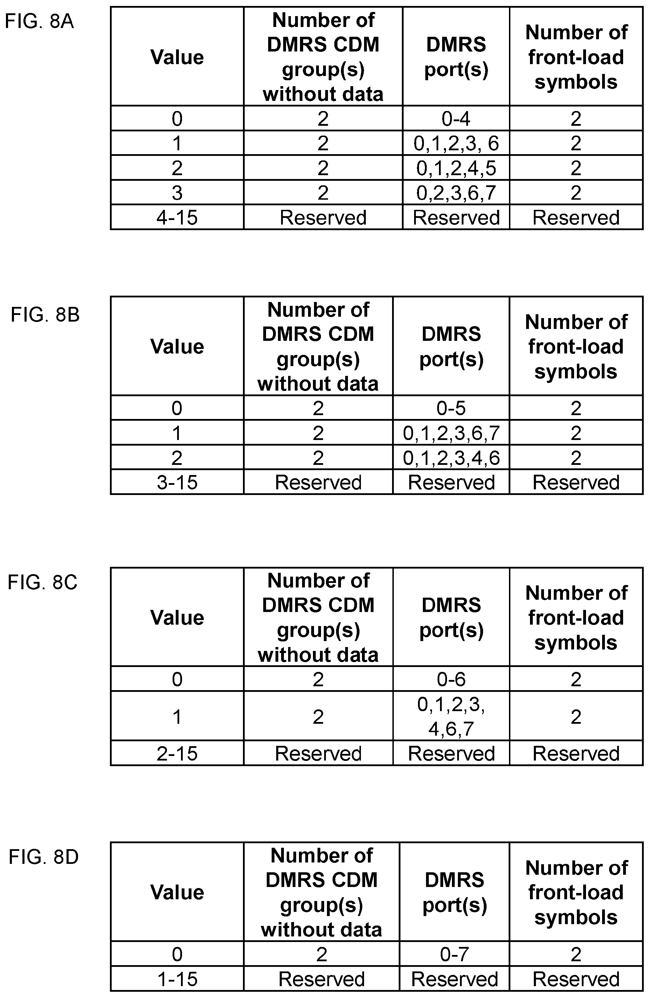

FIGS. 8A to 8D are diagrams to show examples of the antenna port table to be referred to in a case where the transform precoder is disabled, the DMRS type = 1, and the maximum DMRS length = 2.

FIG. 8A is an example of the antenna port table corresponding to rank 5. In the present example, different DMRS port sets (number of antenna ports "5") are associated with values of 0 to 3 of an antenna port field. Note that the correspondence between the values and details of the entries is not limited to this. The same applies to another example.

In FIG. 8A, 2+3 layers and 3+2 layers may be supported. Note that only part of the entries shown may be supported. For example, only an entry for DMRS ports 0 to 4 and only an entry for DMRS ports 0, 1, 2, 3, and 6 may be supported for 2+3 layers and 3+2 layers, respectively.

FIG. 8B is an example of the antenna port table corresponding to rank 6. In the present example, different DMRS port sets (number of antenna ports "6") are associated with values of 0 to 2 of the antenna port field.

In FIG. 8B, 4+2 layers, 2+4 layers, and 3+3 layers may be supported. Note that only a combination of specific X and Y for X+Y layers (for example, 3+3) may be supported.

FIG. 8C is an example of the antenna port table corresponding to rank 7. In the present example, different DMRS port sets (number of antenna ports "7") are associated with values of 0 to 1 of the antenna port field.

In FIG. 8C, 4+3 layers and 3+4 layers may be supported.

FIG. 8D is an example of the antenna port table corresponding to rank 8. In the present example, a DMRS port set (number of antenna ports "8") is associated with a value of 0 of the antenna port field.

In FIG. 8D, only 4+4 layers may be supported.

### {Case Where DMRS Type = 2 and Maximum DMRS Length = 1}

In a case where the DMRS type = 2 and the maximum DMRS length = 1, transmission with up to rank 6 may be supported, only transmission with up to rank 4 may be supported, or transmission with rank 6 (for example, 4+2 layers) may not be supported and only transmission with up to rank 5 may be supported.

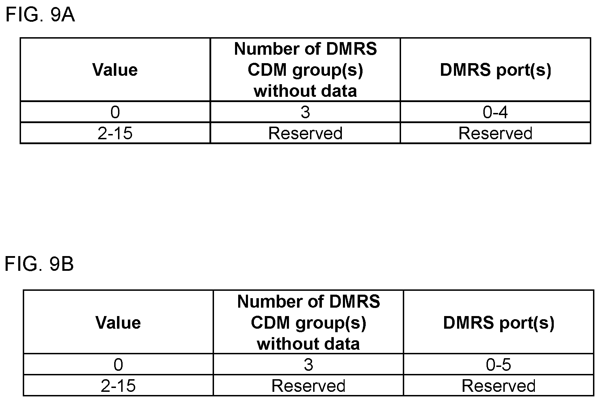

FIGS. 9A and 9B are diagrams to show examples of the antenna port table to be referred to in a case where the transform precoder is disabled, the DMRS type = 2, and the maximum DMRS length = 1.

FIG. 9A is an example of the antenna port table corresponding to rank 5. In the present example, a DMRS port set (number of antenna ports "5") is associated with a value of 0 of an antenna port field.

FIG. 9B is an example of the antenna port table corresponding to rank 6. In the present example, a DMRS port set (number of antenna ports "6") is associated with a value of 0 of the antenna port field.

### {Case Where DMRS Type = 2 and Maximum DMRS Length = 2}

In a case where the DMRS type = 2 and the maximum DMRS length = 2, transmission with up to rank 8 may be supported.

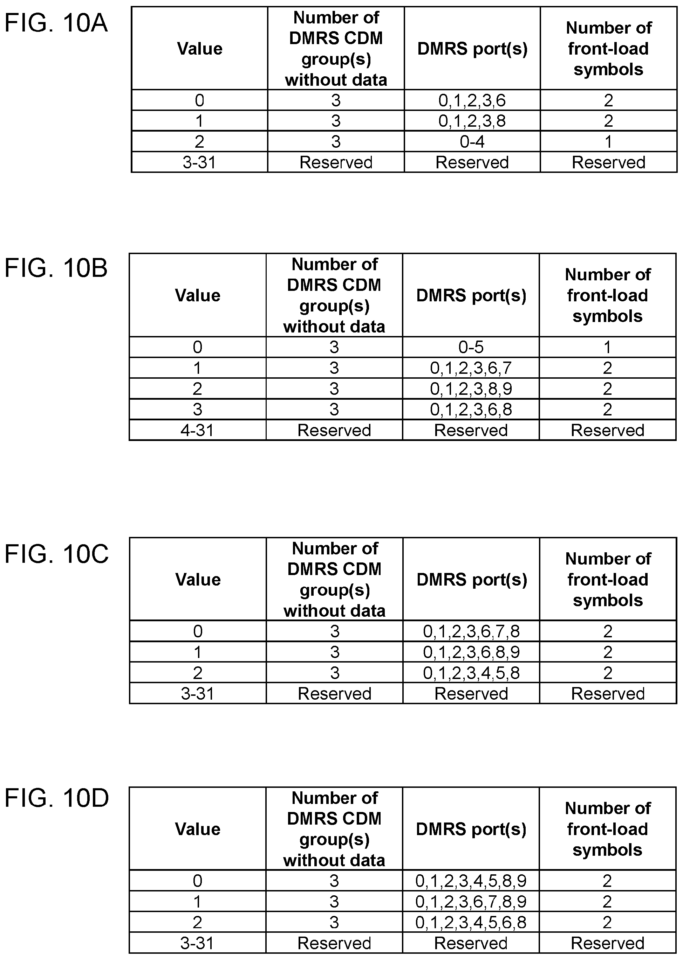

FIGS. 10A to 10D are diagrams to show examples of the antenna port table to be referred to in a case where the transform precoder is disabled, the DMRS type = 2, and the maximum DMRS length = 2.

FIG. 10A is an example of the antenna port table corresponding to rank 5. In the present example, different DMRS port sets (number of antenna ports "5") are associated with values of 0 to 2 of an antenna port field.

FIG. 10B is an example of the antenna port table corresponding to rank 6. In the present example, different DMRS port sets (number of antenna ports "6") are associated with values of 0 to 3 of the antenna port field.

In FIG. 10B, 4+2 layers, 2+4 layers, and 3+3 layers may be supported. Note that only a combination of specific X and Y for X+Y layers (for example, 3+3) may be supported. For example, only an entry corresponding to a value of 3 of the antenna port field in FIG. 8B may be supported for 3+3.

FIG. 10C is an example of the antenna port table corresponding to rank 7. In the present example, different DMRS port sets (number of antenna ports "7") are associated with values of 0 to 2 of the antenna port field.

FIG. 10D is an example of the antenna port table corresponding to rank 8. In the present example, DMRS port sets (number of antenna ports "8") are associated with values of 0 to 2 of the antenna port field.

In FIG. 10D, only an entry corresponding to 4+4 layers may be supported.

According to the indication of the DMRS ports with more than 4 layers described above, an antenna port can be appropriately indicated for a PUSCH using more than 4 layers in a case where a transform precoder is disabled.

### (Analysis)

As described above, for Rel-18 NR, DMRS ports capable of supporting more than 4 layers are under study. For Rel-18 NR, an increased number of orthogonal DMRS ports for a PUSCH/PDSCH is under study. Such a new DMRS port different from an existing DMRS port (also referred to as a Rel-15 DMRS port) is also referred to as a Rel-18 DMRS port, an expanded DMRS port, and so on.

A maximum number of ports for a DMRS type = 1 and a single-symbol DMRS may be increased from 4 for a Rel-15 DMRS to 8, for a Rel-18 DMRS.

A maximum number of ports for a DMRS type = 1 and a double-symbol DMRS may be increased from 8 for the Rel-15 DMRS to 16, for the Rel-18 DMRS.

A maximum number of ports for a DMRS type = 2 and a single-symbol DMRS may be increased from 6 for the Rel-15 DMRS to 12, for the Rel-18 DMRS.

A maximum number of ports for a DMRS type = 2 and a double-symbol DMRS may be increased from 12 for the Rel-15 DMRS to 24, for the Rel-18 DMRS.

Such increase in the number of DMRS ports may be realized by using at least one of the following:
- Expansion of FD-OCC: using an OCC length (for example, 4, 6, or the like) greater than an OCC length (= 2) in Rel. 15;
- Expansion of TD-OCC: using a TD-OCC across non-consecutive DMRS symbols (for example, a TD-OCC across a preceding DMRS / additional DMRS);
- Sparse frequency allocation: increasing the number of CDM groups (for example, increasing the number of combs / times of FDM); and
- Use of DMRS symbol to be TDMed: using/reusing an additional DMRS symbol to increase the number of orthogonal DMRS ports.

### <New DMRS Port Index>

Regarding a PDSCH DMRS, the Rel-18 DMRS port may mean a port with a port number corresponding to at least one of the following:
- A port number greater than 1007 (for example, port numbers 1008 to 1015) (in a case of DMRS configuration type 1); and
- A port number greater than 1011 (for example, port numbers 1012 to 1023) (in a case of DMRS configuration type 2).

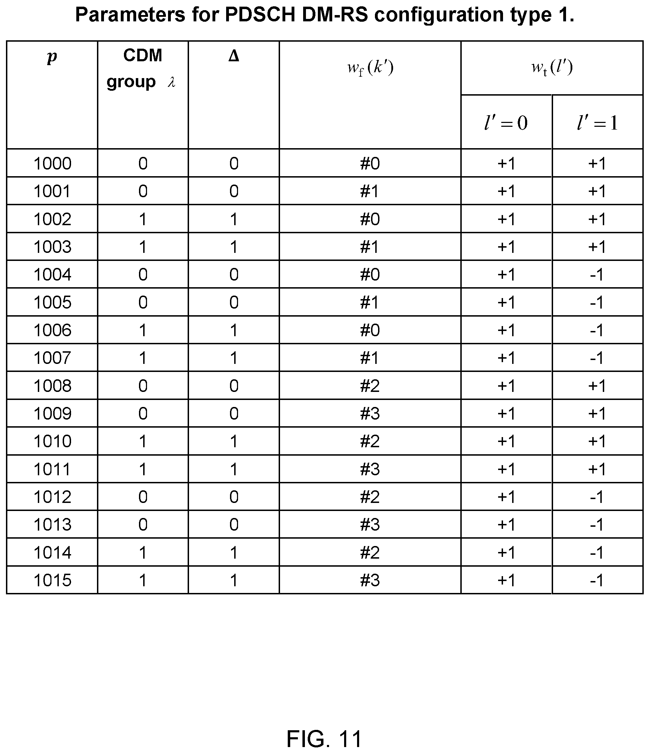

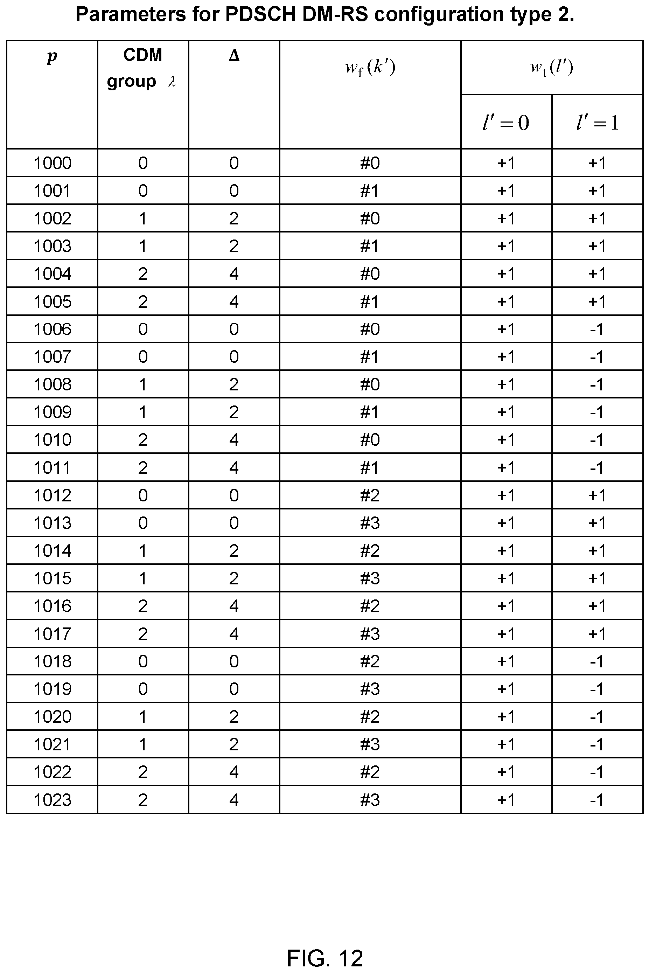

FIG. 11 is a diagram to show an example of parameters for DMRS configuration type 1 for the Rel-18 DMRS. FIG. 12 is a diagram to show an example of parameters for DMRS configuration type 2 for the Rel-18 DMRS. In FIGS. 11 and 12, correspondence between existing parameters (FIG. 1, FIG. 2) may not be changed for entries (including at least one of a CDM group, Δ, an FD OCC, and a TD OCC) corresponding to existing DMRS port indices (1000 to 1007 for DMRS configuration type 1, 1000 to 1011 for DMRS configuration type 2).

In other words, FIG. 11 is a table obtained by adding, to the correspondence for DMRS configuration type 1 in FIG. 1, entries corresponding to the Rel-18 DMRS port (port numbers 1008 to 1015). FIG. 12 is a table obtained by adding, to the correspondence for DMRS configuration type 2 in FIG. 1, entries corresponding to the Rel-18 DMRS port (port numbers 1012 to 1023).

In the present example, for a single-symbol DMRS, port numbers 1000 to 1003, 1008 to 1011 and port numbers 1000 to 1005, 1012 to 1017 may be used in FIG. 11 and FIG. 12, respectively.

Note that a new FD OCC (w_{f}(k')) may be defined. For example, an FD OCC having a length of 6 (k' = 0-5) and an FD OCC having a length of 4 (k' = 0-3) may be used for DMRS configuration type 1 and DMRS configuration type 2, respectively. A column of w_{f}(k') may indicate OCC indices corresponding to antenna ports (in each of FIGS. 11 and 12, #0 to #3). The respective OCC indices may indicate FD OCC sequences having the same/different lengths.

For example, w_{f}(k') = #0 may indicate {w_{f}(0), w_{f}(1), w_{f}(2), w_{f}(3)} = {+1, +1, +1, +1}. w_{f}(k') = #1 may indicate {w_{f}(0), w_{f}(1), w_{f}(2), w_{f}(3)} = {+1, -1, +1, +1}. w_{f}(k') = #2 may indicate {w_{f}(0), w_{f}(1), w_{f}(2), w_{f}(3)} = {+1, +1, -1, -1}. w_{f}(k') = #3 may indicate {w_{f}(0), w_{f}(1), w_{f}(2), w_{f}(3)} = {+1, -1, -1, +1}.

According to such correspondence as that shown in FIGS. 11 and 12, UE / base station implementation can be simplified. Note that the Rel-18 DMRS port numbers, the OCC indices, and the like are not limited to the examples in FIGS. 11 and 12.

Note that, in the present disclosure, a Rel-15/Rel-18 DMRS port number related to a PUSCH DMRS may correspond to a number obtained by subtracting 1000 from a Rel-15/Rel-18 DMRS port number related to a PDSCH DMRS. In other words, details of the Rel-15/Rel-18 DMRS port number related to the PDSCH DMRS may be interchangeably interpreted as details of the Rel-15/Rel-18 DMRS port number related to the PUSCH DMRS obtained by subtracting 1000 from the port number.

### <Port Group Subset>

A Rel-15 DMRS port and a Rel-18 DMRS port may be defined to use the same port number, but to belong to different port group subsets.

For example, in a case of DMRS configuration type 1, existing Rel-15 DMRS ports and Rel-18 DMRS ports may be expressed as ports with port numbers 1000 to 1007 of subset #0 and ports with port numbers 1000 to 1007 of subset #1, respectively.

In a case of DMRS configuration type 2, existing Rel-15 DMRS ports and Rel-18 DMRS ports may be expressed as ports with port numbers 1000 to 1011 of subset #0 and ports with port numbers 1000 to 1011 of subset #1, respectively.

When a concept of a port group subset is used, new correspondence between parameters, a new antenna port indication table, and the like may be used, or existing correspondence between parameters (FIG. 1, FIG. 2), an existing antenna port indication table, and the like may be used instead.

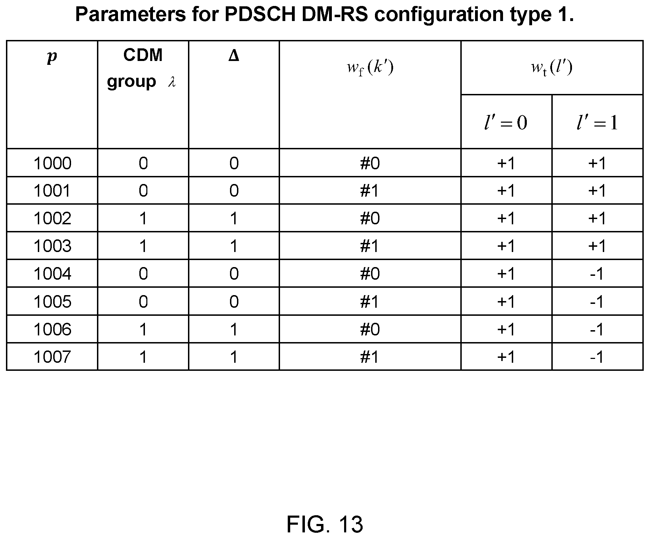

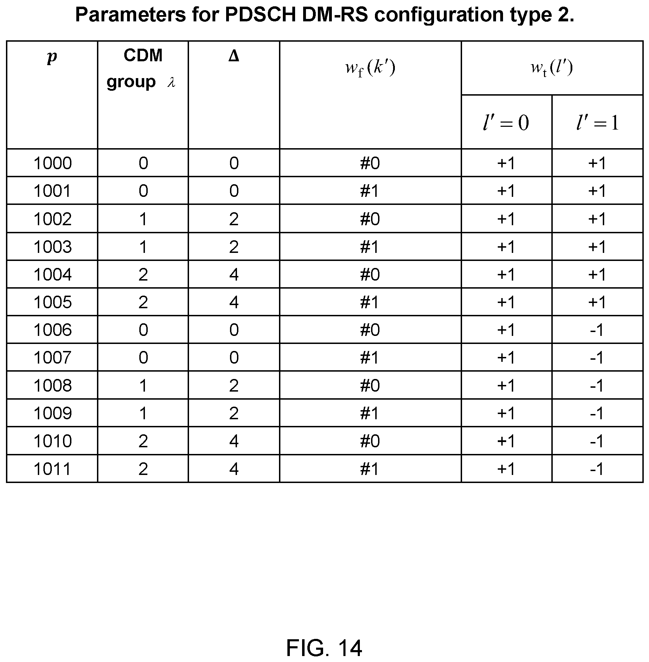

FIG. 13 is a diagram to show an example of parameters for DMRS configuration type 1 for the Rel-18 DMRS. FIG. 14 is a diagram to show an example of parameters for DMRS configuration type 2 for the Rel-18 DMRS. In FIGS. 13 and 14, the existing correspondence between parameters (FIG. 1, FIG. 2) may not be changed for parameters other than w_{f}(k'). As with w_{f}(k') shown in FIGS. 11 and 12, w_{f}(k') may correspond to a new FD OCC, and a column of w_{f}(k') may indicate OCC indices corresponding to antenna ports.

The UE may be notified of a group subset index. For example, the UE notified of a group subset index = #0 may directly use the correspondence shown in FIGS. 13 and 14 (w_{f}(k') = #0 or #1). The UE notified of a group subset index = #1 may use correspondence obtained by interpreting, in the correspondence shown in FIGS. 13 and 14, #0 and #1 as #2 and #3, respectively.

In this manner, the group subset index = #0 and the group subset index = #1 can indicate use of a Rel-15 DMRS port and use of a Rel-18 DMRS port, respectively.

Note that the examples shown in FIGS. 11 to 14 are each an example in which the number of DMRS ports is increased by using expansion of an FD-OCC, but the increase in the number of DMRS ports in the present disclosure is not limited to this. One or a plurality of combinations of the methods for increasing the number of DMRS ports described above may be applied, and, in this case, correspondence between the parameters corresponding to the antenna ports of the present disclosure may be different from that of FIGS. 11 to 14.

### <Use of Rel-18 DMRS Port for MU-MIMO/SU-MIMO>

MU-MIMO between the Rel-15 DMRS port and the Rel-18 DMRS port may be allowed.

It is conceivable that no scheduling restriction is imposed on MU-MIMO using different CDM groups, including MU-MIMO between a Rel-15 UE (UE incapable of using the Rel-18 DMRS port) and a Rel-18 UE (UE capable of using the Rel-18 DMRS port).

It is conceivable that for MU-MIMO in one CDM group, no scheduling restriction is also imposed on a PUSCH.

On the other hand, it is conceivable that for MU-MIMO in one CDM group, scheduling restriction is necessary for a PDSCH so that an orthogonal relationship between DMRS ports is assured. For example, PDSCH #1 to Rel-18 UE #A using Rel-15 DMRS port #1000 and PDSCH #2 to Rel-18 UE #B using Rel-18 DMRS port #1008 may be multiplexed by using an FD-OCC in one CDM group and transmitted from the same base station.

A UE / base station may assure, based on UE capability / RRC configuration, the UE of, for example, decoding of an FD-OCC for each 4 DMRS resource elements (even when a Rel-18 DMRS port is not configured for the UE).

Note that dynamic switching between the Rel-15 DMRS port and the Rel-18 DMRS port based on DCI may be supported. In this case, a new field / existing field (for example, an antenna port field) of the DCI may indicate an antenna port table to be referred to.

Semi-static switching between the Rel-15 DMRS port and the Rel-18 DMRS port based on higher layer signaling may be supported.

Incidentally, as described above in FIG. 8 and the like, it is studied that a PUSCH/PDSCH with more than 4 layers is performed by using a double-symbol DMRS. However, the double-symbol DMRS has large DMRS-related communication overhead. Thus, frequently using the double-symbol DMRS may suppress increase in an amount of data capable of being transmitted (communication throughput).

Hence, the inventors of the present invention came up with the idea of a method for appropriately transmitting/receiving a PUSCH/PDSCH with more than 4 layers by using a single-symbol DMRS. According to an aspect of the present disclosure, suitable communication can be performed by using a Rel-18 DMRS port for SU-MIMO.

Embodiments according to the present disclosure will be described in detail with reference to the drawings as follows. The radio communication methods according to respective embodiments may each be employed individually, or may be employed in combination.

In the present disclosure, "A/B" and "at least one of A and B" may be interchangeably interpreted. In the present disclosure, "A/B/C" may mean "at least one of A, B, and **C."**

In the present disclosure, notify, activate, deactivate, indicate, select, configure, update, determine, and the like may be interchangeably interpreted. In the present disclosure, "support," "control," "controllable," "operate," "operable," and the like may be interchangeably interpreted.

In the present disclosure, radio resource control (RRC), an RRC parameter, an RRC message, a higher layer parameter, a field, an information element (IE), a configuration, and the like may be interchangeably interpreted. In the present disclosure, a Medium Access Control control element (MAC Control Element (CE)), an update command, an activation/deactivation command, and the like may be interchangeably interpreted.

In the present disclosure, the higher layer signaling may be, for example, any one or combinations of Radio Resource Control (RRC) signaling, Medium Access Control (MAC) signaling, broadcast information, and the like.

In the present disclosure, the MAC signaling may use, for example, a MAC control element (MAC CE), a MAC Protocol Data Unit (PDU), or the like. The broadcast information may be, for example, a master information block (MIB), a system information block (SIB), minimum system information (Remaining Minimum System Information (RMSI)), other system information (OSI), or the like.

In the present disclosure, the physical layer signaling may be, for example, downlink control information (DCI), uplink control information (UCI), or the like.

In the present disclosure, an index, an identifier (ID), an indicator, a resource ID, and the like may be interchangeably interpreted. In the present disclosure, a sequence, a list, a set, a group, a cluster, a subset, and the like may be interchangeably interpreted.

In the present disclosure, a panel, a UE panel, a panel group, a beam, a beam group, a precoder, an Uplink (UL) transmission entity, a transmission/reception point (TRP), a base station, spatial relation information (SRI), a spatial relation, an SRS resource indicator (SRI), a control resource set (CORESET), a Physical Downlink Shared Channel (PDSCH), a codeword (CW), a transport block (TB), a reference signal (RS), an antenna port (for example, a demodulation reference signal (DMRS) port), an antenna port group (for example, a DMRS port group), a group (for example, a spatial relation group, a code division multiplexing (CDM) group, a reference signal group, a CORESET group, a Physical Uplink Control Channel (PUCCH) group, a PUCCH resource group), a resource (for example, a reference signal resource, an SRS resource), a resource set (for example, a reference signal resource set), a CORESET pool, a downlink Transmission Configuration Indication state (TCI state) (DL TCI state), an uplink TCI state (UL TCI state), a unified TCI state, a common TCI state, quasi-co-location (QCL), QCL assumption, and the like may be interchangeably interpreted.

In the present disclosure, description "Rel. XX" represents 3GPP release. Note, however, that the release number "XX " is an example, and may be replaced with another number.

In the present disclosure, a DMRS, a DL DMRS, a UL DMRS, a PDSCH DMRS and a PUSCH DMRS may be interchangeably interpreted.

In the present disclosure, an orthogonal sequence, an OCC, an FD OCC, and a TD OCC may be interchangeably interpreted.

In the present disclosure, a DMRS port, an antenna port, a port, and a DMRS port index may be interchangeably interpreted. In the present disclosure, DMRS CDM group(s), CDM group(s), DMRS group(s), DMRS CDM group(s) without data, and the like may be interchangeably interpreted. In the present disclosure, antenna port indication and an antenna port field may be interchangeably interpreted. In the present disclosure, a DMRS configuration type, a DMRS type, and an RRC parameter "dmrs-Type" may be interchangeably interpreted. In the present disclosure, a maximum DMRS length, a maximum number of DMRS symbols, the number of DMRS symbols, and an RRC parameter "maxLength" may be interchangeably interpreted.

In the present disclosure, DMRS type1 (or DMRS type = 1) may mean that an RRC parameter "dmrs-Type" is not configured (for example, an RRC parameter "dmrs-Type" is absent in a DMRS configuration (DMRS-DownlinkConfig information element / DMRS-UplinkConfig information element), or may mean that "1" (or type 1 (type1)) is configured as an RRC parameter related to a DMRS type.

In the present disclosure, a maximum DMRS length = 1 may mean that an RRC parameter "maxLength" is not configured (for example, an RRC parameter "maxLength" is absent in a DMRS configuration (DMRS-DownlinkConfig information element / DMRS-UplinkConfig information element), or may mean that "1" (or a length of 1 (len1)) is configured as an RRC parameter related to a maximum DMRS length.

In the present disclosure, a CDM group list, a port group list, and a list may be interchangeably interpreted. In the present disclosure, a CDM group subset, a port group subset, and a group subset may be interchangeably interpreted.

In the present disclosure, a rank, a transmission rank, the number of layers, and the number of antenna ports may be interchangeably interpreted. One codeword being applied and the number of layers being 4 layers or less may be interchangeably interpreted. Two codewords being applied and the number of layers being greater than 4 layers may be interchangeably interpreted.

In the present disclosure, "transform precoding being configured" may be interchangeably interpreted as "transform precoding being configured to be enabled."

Note that, in the present disclosure, "having capability of ..." may be interchangeably interpreted as "supporting/reporting capability of ...."

In the present disclosure, a table and one or a plurality of tables may be interchangeably interpreted.

DCI in the following embodiments may mean DCI (for example, DCI format 0_x or DCI format 1_x (where x is an integer)) for scheduling at least one of a PUSCH and a PDSCH.

The following embodiments describe examples in which Rel-18 DMRS ports are represented by using new DMRS port indices, but are not limited to this. For example, the embodiments of the present disclosure may be applied to a case where a Rel-18 DMRS port is represented by using a port group subset.

### (Radio Communication Method)

### <First Embodiment>

A first embodiment relates to a PUSCH DMRS.

In the first embodiment, a UE may use, for PUSCH transmission with rank 5 or higher, a Rel-15 DMRS port for a single-symbol DMRS and a Rel-18 DMRS port for a single-symbol DMRS in combination.

For DMRS type 1, an antenna port field may indicate, for the UE, the following DMRS port combinations:
- a combination of port indices #0, #1, #2, #3, #8, #9, #10, and #11 for rank 8;
- a combination of seven indices from among port indices #0, #1, #2, #3, #8, #9, #10, and #11 (for example, #0, #1, #2, #3, #8, #9, and #10) for rank 7;
- a combination of six indices from among port indices #0, #1, #2, #3, #8, #9, #10, and #11 (for example, #0, #1, #2, #3, #8, and #9) for rank 6; and
- a combination of five indices from among port indices #0, #1, #2, #3, #8, #9, #10, and #11 (for example, #0, #1, #2, #3, and #8) for rank 5.

For DMRS type 2, an antenna port field may indicate, for the UE, the following DMRS port combinations:
- a combination of eight indices from among port indices #0, #1, #2, #3, #4, #5, #12, #13, #14, #15, #16, and #17 (for example, #0, #1, #2, #3, #4, #5, #12, and #13) for rank 8;
- a combination of seven indices from among port indices #0, #1, #2, #3, #4, #5, #12, #13, #14, #15, #16, and #17 (for example, #0, #1, #2, #3, #4, #5, and #12) for rank 7;
- a combination of six indices from among port indices #0, #1, #2, #3, #4, #5, #12, #13, #14, #15, #16, and #17 (for example, #0, #1, #2, #3, #4, and #5) for rank 6; and
- a combination of five indices from among port indices #0, #1, #2, #3, #4, #5, #12, #13, #14, #15, #16, and #17 (for example, #0, #1, #2, #3, and #4) for rank 5.

An example of an antenna port table for PUSCH DMRS port indication (also referred to hereinafter as an antenna port indication table, a DMRS port indication table, a DMRS port table, and so on) will be described below. Note that the UE may determine which antenna port indication table is to be referred to, based on a value of a rank determined based on a precoding information field / SRI field, a DMRS type, a maximum DMRS length, and the like.

The UE may receive DCI related to a PUSCH including an antenna port field (antenna port indication), and may control transmission (mapping and the like) of a DMRS/PUSCH, based on a value of the field and the antenna port indication table determined to be referred to.

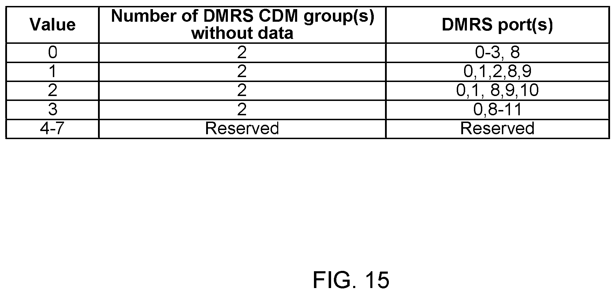

FIG. 15 is a diagram to show an example of the antenna port indication table to be referred to in a case where a transform precoder is disabled, a DMRS type = 1, a maximum DMRS length = 1, and a rank = 5, according to the first embodiment. Values = 0, 1, 2, 3 of the antenna port field correspond to {Number of Rel-15 DMRS ports, Number of Rel-18 DMRS ports} = {4, 1}, {3, 2}, {2, 3}, {1, 4}, respectively.

Note that the table shown in FIG. 15 may be referred to by the UE when the UE is configured with a Rel-18 DMRS (or enabling of a Rel-18 DMRS / enabling of a Rel-18 DMRS port). A plurality of entries (rows in the table) indicating the same {Number of Rel-15 DMRS ports, Number of Rel-18 DMRS ports} may be defined, only some of the entries shown in FIG. 15 may be defined, or a combination of port indices different from the combinations of port indices shown in FIG. 15 may be defined (the same applies to the drawings below related to the antenna port indication table).

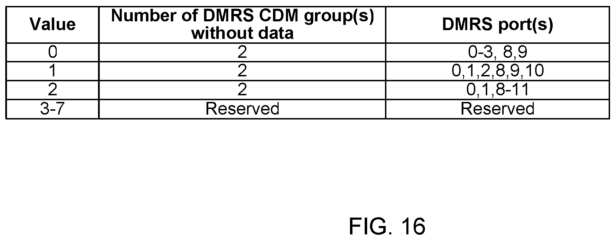

FIG. 16 is a diagram to show an example of the antenna port indication table to be referred to in a case where a transform precoder is disabled, a DMRS type = 1, a maximum DMRS length = 1, and a rank = 6, according to the first embodiment. Values = 0, 1, 2 of the antenna port field correspond to {Number of Rel-15 DMRS ports, Number of Rel-18 DMRS ports} = {4, 2}, {3, 3}, {2, 4}, respectively.

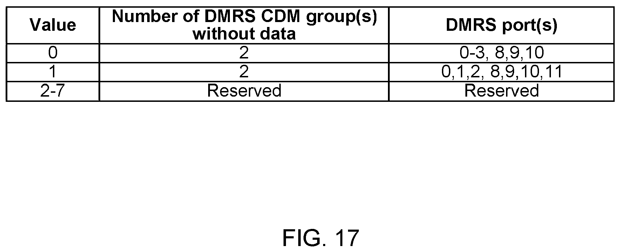

FIG. 17 is a diagram to show an example of the antenna port indication table to be referred to in a case where a transform precoder is disabled, a DMRS type = 1, a maximum DMRS length = 1, and a rank = 7, according to the first embodiment. Values = 0, 1 of the antenna port field correspond to {Number of Rel-15 DMRS ports, Number of Rel-18 DMRS ports} = {4, 3}, {3, 4}, respectively.

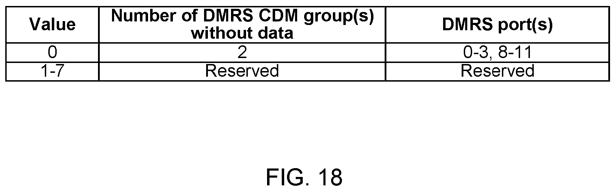

FIG. 18 is a diagram to show an example of the antenna port indication table to be referred to in a case where a transform precoder is disabled, a DMRS type = 1, a maximum DMRS length = 1, and a rank = 8, according to the first embodiment. A value = 0 of the antenna port field corresponds to {Number of Rel-15 DMRS ports, Number of Rel-18 DMRS ports} = {4, 4}.

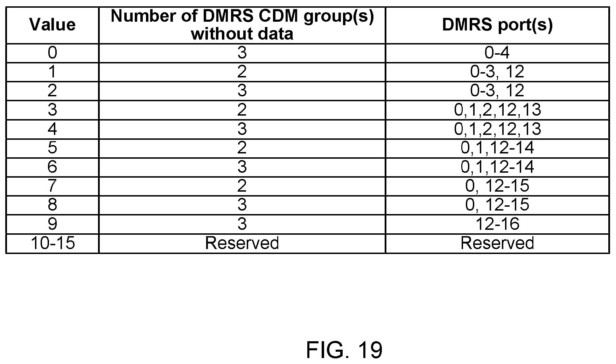

FIG. 19 is a diagram to show an example of the antenna port indication table to be referred to in a case where a transform precoder is disabled, a DMRS type = 2, a maximum DMRS length = 1, and a rank = 5, according to the first embodiment. Values = 0, 1-2, 3-4, 5-7, 7-8, 9 of the antenna port field correspond to {Number of Rel-15 DMRS ports, Number of Rel-18 DMRS ports} = {5, 0}, {4, 1}, {3, 2}, {2, 3}, {1, 4}, {0, 5}, respectively.

Note that DMRS ports corresponding to {Number of Rel-15 DMRS ports, Number of Rel-18 DMRS ports} = {5, 0}, {0, 5} shown in FIG. 19 use all of CDM groups #0 to #2 (as can be seen from FIG. 12), and thus the number of CDM groups is 3.

DMRS ports corresponding to {Number of Rel-15 DMRS ports, Number of Rel-18 DMRS ports} = {4, 1}, {3, 2}, {2, 3}, {1, 4} shown in FIG. 19 use two of CDM groups #0 to #2 (as can be seen from FIG. 12), and thus the number of CDM groups is 2 or 3. When this number of CDM groups is 2, the UE can transmit a PUSCH in a resource element corresponding to the remaining one CDM group in a DMRS symbol (a complex-valued symbol block (generated by coding data and the like) can be mapped to an indicated DMRS port (port for PUSCH transmission)), and thus increase in communication throughput or reduction in an error rate of the PUSCH based on reduction in a coding rate can be expected.

When the number of CDM groups is 3, another UE can perform DMRS/PUSCH transmission by using the remaining one CDM group, and thus improvement in system use efficiency can be expected.

Accordingly, adopting such a table as that shown in FIG. 19 can indicate, for the UE, different numbers of CDM groups for the same combination of {Number of Rel-15 DMRS ports, Number of Rel-18 DMRS ports} (or the same combination of DMRS ports), and thus flexible control with consideration of traffic of each UE and the like can be performed.

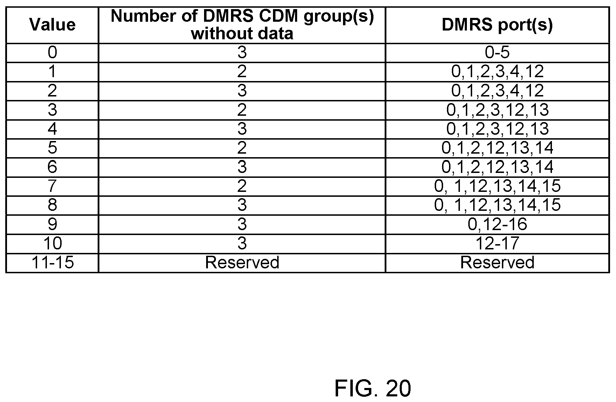

FIG. 20 is a diagram to show an example of the antenna port indication table to be referred to in a case where a transform precoder is disabled, a DMRS type = 2, a maximum DMRS length = 1, and a rank = 6, according to the first embodiment.

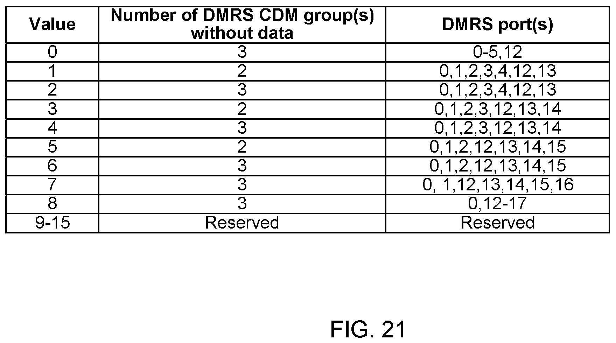

FIG. 21 is a diagram to show an example of the antenna port indication table to be referred to in a case where a transform precoder is disabled, a DMRS type = 2, a maximum DMRS length = 1, and a rank = 7, according to the first embodiment.

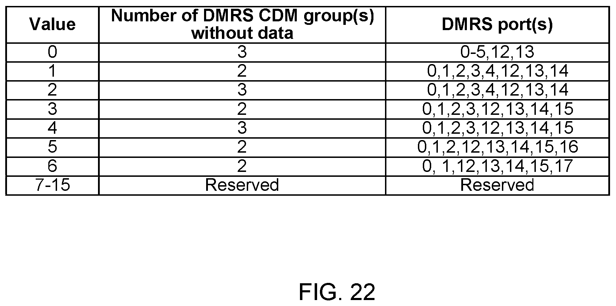

FIG. 22 is a diagram to show an example of the antenna port indication table to be referred to in a case where a transform precoder is disabled, a DMRS type = 2, a maximum DMRS length = 1, and a rank = 8, according to the first embodiment.

According to the first embodiment described above, PUSCH transmission with rank 5 or higher can be performed based on a single-symbol DMRS, and thus communication overhead for a DMRS can be reduced as compared with that for PUSCH transmission based on a double-symbol DMRS. An antenna port indication table with a maximum DMRS length = 1 is used, thereby allowing a size of an antenna port field of DCI to be reduced as compared with that in a case of a maximum DMRS length = 2 (for example, the tables in FIGS. 8A to 8D), and thus communication overhead for an antenna port field can be reduced.

### <Second Embodiment>

A second embodiment relates to a PDSCH DMRS.

In the second embodiment, a UE may use, for PDSCH transmission with rank 5 or higher, a Rel-15 DMRS port for a single-symbol DMRS and a Rel-18 DMRS port for a single-symbol DMRS in combination.

For DMRS type 1, an antenna port field may indicate, for the UE, the following DMRS port combinations:
- a combination of port indices #1000, #1001, #1002, #1003, #1008, #1009, #1010, and #1011 for rank 8;
- a combination of seven indices from among port indices #1000, #1001, #1002, #1003, #1008, #1009, #1010, and #1011 (for example, #1000, #1001, #1002, #1003, #1008, #1009, and #1010) for rank 7;
- a combination of six indices from among port indices #1000, #1001, #1002, #1003, #1008, #1009, #1010, and #1011 (for example, #1000, #1001, #1002, #1003, #1008, and #1009) for rank 6; and
- a combination of five indices from among port indices #1000, #1001, #1002, #1003, #1008, #1009, #1010, and #1011 (for example, #1000, #1001, #1002, #1003, and #1008) for rank 5.

For DMRS type 2, the antenna port field may indicate, for the UE, the following DMRS port combinations:
- a combination of eight indices from among port indices #1000, #1001, #1002, #1003, #1004, #1005, #1012, #1013, #1014, #1015, #1016, and #1017 (for example, #1000, #1001, #1002, #1003, #1004, #1005, #1012, and #1013) for rank 8;
- a combination of seven indices from among port indices #1000, #1001, #1002, #1003, #1004, #1005, #1012, #1013, #1014, #1015, #1016, and #1017 (for example, #1000, #1001, #1002, #1003, #1004, #1005, and #1012) for rank 7;
- a combination of six indices from among port indices #1000, #1001, #1002, #1003, #1004, #1005, #1012, #1013, #1014, #1015, #1016, and #1017 (for example, #1000, #1001, #1002, #1003, #1004, and #1005) for rank 6; and
- a combination of five indices from among port indices #1000, #1001, #1002, #1003, #1004, #1005, #1012, #1013, #1014, #1015, #1016, and #1017 (for example, #1000, #1001, #1002, #1003, and #1004) for rank 5.

An example of an antenna port indication table for PDSCH DMRS port indication will be described below. Note that the UE may determine which antenna port indication table is to be referred to, based on a DMRS type, a maximum DMRS length, and the like.

The UE may receive DCI related to a PDSCH including an antenna port field (antenna port indication), and may control reception (demapping and the like) of a DMRS/PDSCH, based on a value of the field and the antenna port indication table determined to be referred to.

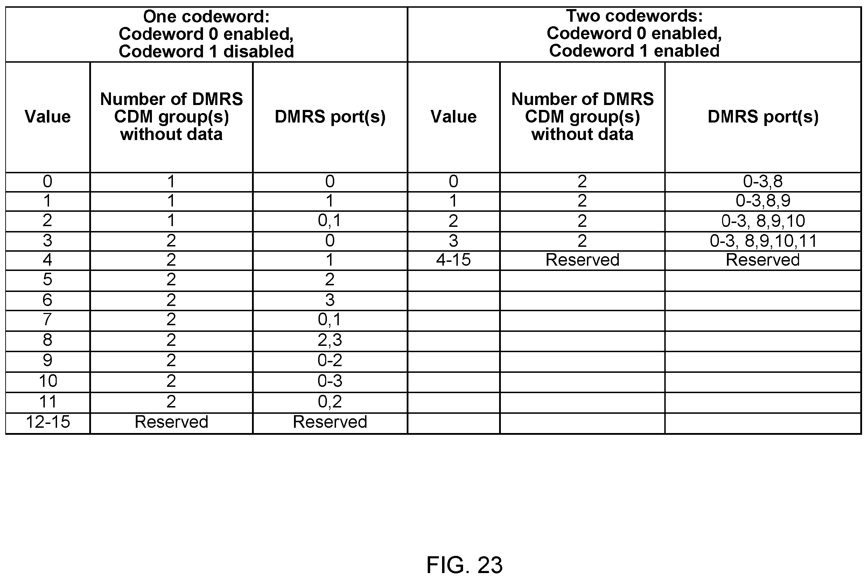

FIG. 23 is a diagram to show an example of the antenna port indication table to be referred to in a case where a DMRS type = 1 and a maximum DMRS length = 1, according to the second embodiment.

Note that the left side of the table corresponds to four layers or less, and is referred to when a PDSCH with one codeword is scheduled. The right side of the table corresponds to five layers or more, and is referred to when a PDSCH with two codewords is scheduled. A PDSCH DMRS port number actually corresponds to a number obtained by adding 1000 to the value shown in FIG. 23 (the same applies to the drawings of the antenna port indication table for the PDSCH DMRS below).

Values = 0, 1, 2, 3 of the antenna port field in a case of two codewords in the table in FIG. 23 correspond to {Number of Rel-15 DMRS ports, Number of Rel-18 DMRS ports} = {4, 1}, {4, 2}, {4, 3}, {4, 4} (in other words, 5, 6, 7, 8 layers), respectively.

Note that the UE may be configured with information on a maximum number of codewords capable of being scheduled by the DCI (for example, an RRC parameter "maxNrofCodeWordsScheduledByDCI"), from a base station, and may judge to refer to the right side of the antenna port indication table when the information indicates a value greater than 1 and the DCI includes a plurality of specific fields (for example, MCS fields).

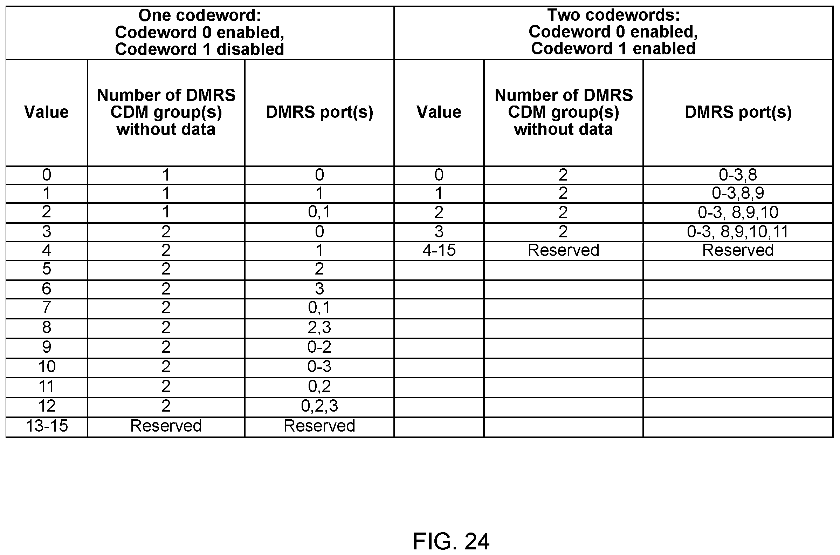

FIG. 24 is a diagram to show an example of the antenna port indication table to be referred to in a case where a DMRS type = 1 and a maximum DMRS length = 1, according to the second embodiment. The antenna port indication table in FIG. 24 is a table used when the UE receives an activation command for mapping, to two TCI states, at least one codepoint of a Transmission configuration indication (TCI) field included in the DCI. In other words, FIG. 24 is a table for supporting, in single-DCI multi-TRP, a layer combination across different TRPs different from that of FIG. 23 (for example, 1 layer from TRP 1# and 2 layers from TRP #2 corresponding to a value = 12).

An entry in a case of two codewords in the table in FIG. 24 is the same as the entry in the case of two codewords in the table in FIG. 23, but is not limited to this. For example, a value = 2 in the case of two codewords in the table in FIG. 24 can correspond to 4 layers from TRP #1 and 3 layers from TRP #2, but an entry indicating a combination of different layers for the same total of 7 layers may be defined instead.

Note that ports (port numbers) may be associated with the TRPs, or CDM groups (CDM group indices) may be associated with the TRPs. Note that association (correspondence) between the port numbers / CDM group indices and the TRPs may be predefined in a specification, or may be configured for the UE by using higher layer signaling / physical layer signaling.

Assuming that ports #1000 to #1003 and ports #1008 to #1011 correspond to TRP #1 and TRP #2, respectively, an entry including, as DMRS ports related to 7 layers, at least one of "0-3, 8-10" (4 layers from TRP #1 + 3 layers from TRP #2), "0-2, 8-11" (3 layers from TRP #1 + 4 layers from TRP #2), and the like may be defined, for example.

Assuming that CDM group #0 and CDM group #1 correspond to TRP #1 and TRP #2, respectively, an entry including, as DMRS ports related to 7 layers, at least one of "0-3, 8-10" (4 layers from TRP #1 + 3 layers from TRP #2), "0-2, 8-11" (4 layers from TRP #1 + 3 layers from TRP #2), "0-3, 8, 10-11" (3 layers from TRP #1 + 4 layers from TRP #2), "0, 2-3, 8-11" (3 layers from TRP #1 + 4 layers from TRP #2), and the like may be defined, for example.

An entry indicating a combination of different layers may be similarly defined for an entry for another number of layers.

Note that, in the second embodiment, a maximum number of layers per TRP (or codeword) may be configured/defined. For example, the maximum number of layers per TRP (or codeword) may be 4. The UE may expect that the number of layers per TRP derived from a configuration of DMRS ports included in the antenna port indication table does not exceed the maximum number of layers per TRP (or codeword) .

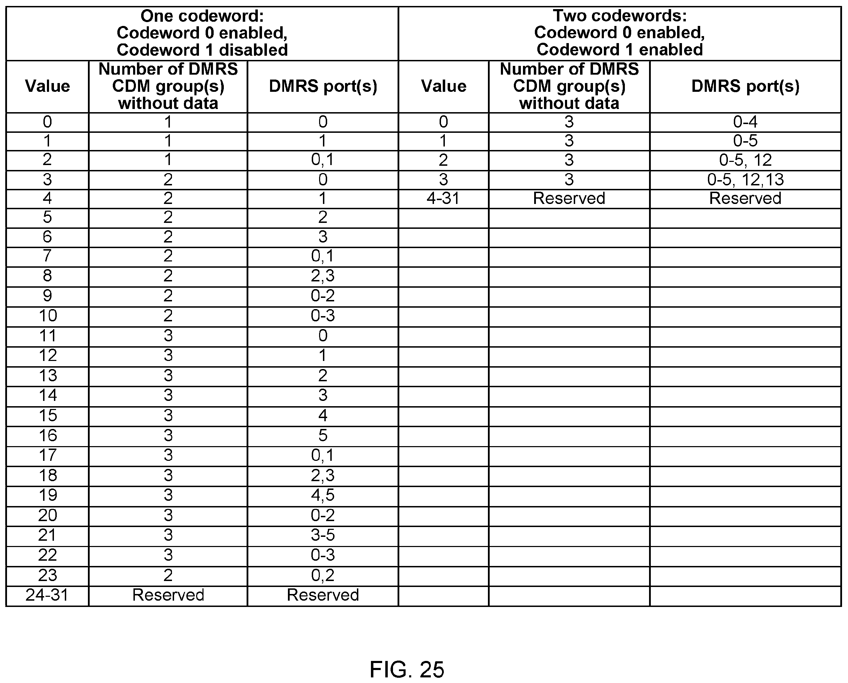

FIG. 25 is a diagram to show an example of the antenna port indication table to be referred to in a case where a DMRS type = 2 and a maximum DMRS length = 1, according to the second embodiment.

Values = 0, 1, 2, 3 of the antenna port field in a case of two codewords in the table in FIG. 25 correspond to {Number of Rel-15 DMRS ports, Number of Rel-18 DMRS ports} = {5, 0}, {6, 0}, {6, 1}, {6, 2} (in other words, 5, 6, 7, 8 layers), respectively.

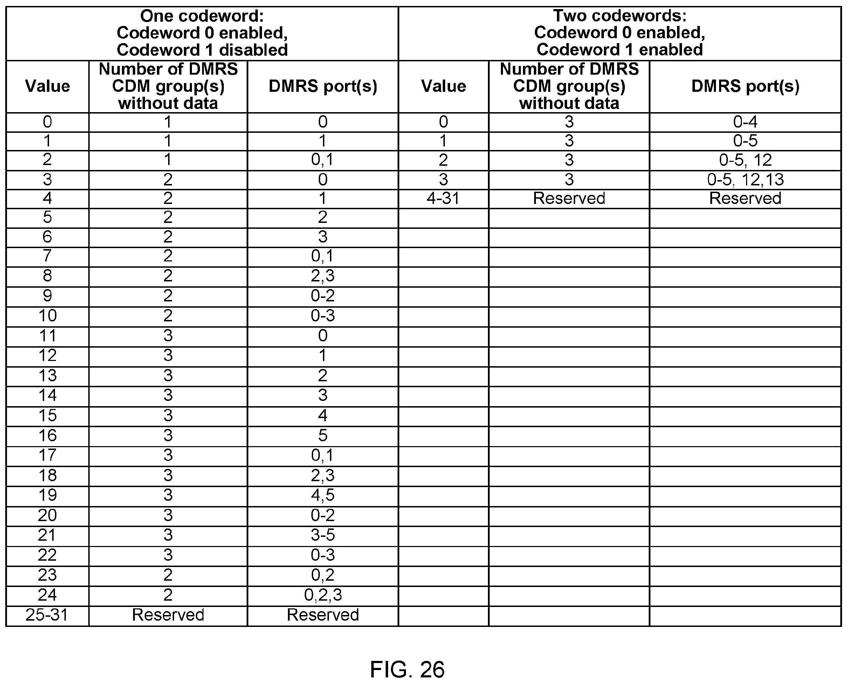

FIG. 26 is a diagram to show an example of the antenna port indication table to be referred to in a case where a DMRS type = 2 and a maximum DMRS length = 1, according to the second embodiment. As with the table in FIG. 24, the antenna port indication table in FIG. 26 is a table used when the UE receives an activation command for mapping, to two TCI states, at least one codepoint of a TCI field included in the DCI.

An entry in a case of two codewords in the table in FIG. 26 is the same as the entry in the case of two codewords in the table in FIG. 25, but is not limited to this. For example, a value = 2 in the case of two codewords in the table in FIG. 26 can correspond to 5 layers from TRP #1 (for example, ports #1000 to #1004) and 2 layers from TRP #2 (for example, ports #1005 and #1012), but an entry indicating a combination of different layers for the same total of 7 layers may be defined instead.

Note that ports may be associated with the TRPs, or CDM groups may be associated with the TRPs.

Assuming that ports #1000 to #1005 and ports #1012 to #1017 correspond to TRP #1 and TRP #2, respectively, an entry including, as DMRS ports related to 7 layers, at least one of "0-5, 12" (6 layers from TRP #1 + 1 layer from TRP #2), "0-4, 12-13" (5 layers from TRP #1 + 2 layers from TRP #2), "0-3, 12-14" (4 layers from TRP #1 + 3 layers from TRP #2), "0-2, 12-15" (3 layers from TRP #1 + 4 layers from TRP #2), "0-1, 12-16" (2 layers from TRP #1 + 5 layers from TRP #2), "0, 12-17" (1 layer from TRP #1 + 6 layers from TRP #2), and the like may be defined, for example.

Assuming that CDM groups #0 and #2 and CDM group #1 correspond to TRP #1 and TRP #2, respectively, an entry including, as DMRS ports, at least one of "0-5, 12" (5 layers from TRP #1 + 2 layers from TRP #2), "0-4, 12-13" (5 layers from TRP #1 + 2 layers from TRP #2), "0-3, 12-14" (4 layers from TRP #1 + 3 layers from TRP #2), "0-2, 12-15" (4 layers from TRP #1 + 3 layers from TRP #2), "0-1, 12-16" (5 layers from TRP #1 + 2 layers from TRP #2), "0-4, 12, 14-15" (3 layers from TRP #1 + 4 layers from TRP #2), and the like may be defined, for example. Assuming that CDM group #0 and CDM groups #1 and #2 correspond to TRP #1 and TRP #2, respectively, an entry including, as DMRS ports, at least one of "0-5, 14" (2 layers from TRP #1 + 5 layers from TRP #2) and the like may be defined, for example. An entry indicating a combination of different layers may be similarly defined for an entry for another number of layers.

An entry indicating a combination of different layers may be similarly defined for an entry for another number of layers.

Note that only the number of CDM groups = 3 is indicated in the case of two codewords in the table of FIG. 26, but as also described in the first embodiment, an entry indicating the number of CDM groups = 2 may be defined. For example, for five layers, the number of CDM groups corresponding to DMRS ports "0-3, 12" may be 2 or 3. For six layers, the number of CDM groups corresponding to DMRS ports "0-3, 12-13" may be 2 or 3.

When the number of CDM groups is 2, the UE can receive a PDSCH in a resource element corresponding to the remaining one CDM group in a DMRS symbol (reception processing can be performed under assumption that a complex-valued symbol block (generated by coding data and the like) is mapped to an indicated DMRS port (port for PDSCH reception)), and thus increase in communication throughput or reduction in an error rate of the PDSCH based on reduction in a coding rate can be expected.

When the number of CDM groups is 3, another UE can perform DMRS/PUSCH reception by using the remaining one CDM group, and thus improvement in system use efficiency can be expected.

Accordingly, in a case where different numbers of CDM groups for the same combination of {Number of Rel-15 DMRS ports, Number of Rel-18 DMRS ports} (or the same combination of DMRS ports) can be indicated for the UE, flexible control with consideration of traffic of each UE and the like can be performed.

According to the second embodiment described above, PDSCH transmission with rank 5 or higher can be performed based on a single-symbol DMRS, and thus communication overhead for a DMRS can be reduced as compared with that for PDSCH transmission based on a double-symbol DMRS. An antenna port indication table with a maximum DMRS length = 1 is used, thereby allowing a size of an antenna port field of DCI to be reduced as compared with that in a case of a maximum DMRS length = 2, and thus communication overhead for an antenna port field can be reduced.

### <Supplement>

In the present disclosure, a case that the UE / base station uses (/ refers to / performs processing based on) a table is not limited to the meaning of use of the table itself, and may mean use of a sequence, list, function, or the like including information according to the table.

### {Notification of Information to UE}

Any notification of information (from a network (NW) (for example, a base station (BS))) to a UE (in other words, any reception, in the UE, of information from the BS) in the above-described embodiments may be performed by using physical layer signaling (for example, DCI), higher layer signaling (for example, RRC signaling, a MAC CE), a specific signal/channel (for example, a PDCCH, a PDSCH, a reference signal), or combinations of these.

In a case where the notification described above is performed by a MAC CE, the MAC CE may be identified by a new logical channel ID (LCID) being included in a MAC sub-header, the new logical channel ID being not defined in an existing specification.

In a case where the notification described above is performed by DCI, the notification described above may be performed by using a specific field of the DCI, a radio network temporary identifier (RNTI) used to scramble a cyclic redundancy check (CRC) bit attached to the DCI, a format of the DCI, and the like.

Any notification of information to the UE in the above-described embodiments may be performed periodically, semi-persistently, or aperiodically.

### {Notification of Information from UE}

Any notification of information from a UE (to a NW) (in other words, any transmission/reporting, in the UE, of information to the BS) in the above-described embodiments may be performed by using physical layer signaling (for example, UCI), higher layer signaling (for example, RRC signaling, a MAC CE), a specific signal/channel (for example, a PUCCH, a PUSCH, a PRACH, a reference signal), or combinations of these.

In a case where the notification described above is performed by a MAC CE, the MAC CE may be identified by a new LCID being included in a MAC sub-header, the new LCID being not defined in an existing specification.

In a case where the notification described above is performed by UCI, the notification described above may be transmitted by using a PUCCH or a PUSCH.

Any notification of information from the UE in the above-described embodiments may be performed periodically, semi-persistently, or aperiodically.

### {Application of Respective Embodiments}

At least one of the above-described embodiments may be applied to a case where a specific condition is satisfied. The specific condition may be defined in a specification, or may be notified to the UE/BS by using higher layer signaling / physical layer signaling.

At least one of the above-described embodiments may be applied only to a UE that has reported specific UE capability or that supports the specific UE capability.

The specific UE capability may indicate at least one of the following:
- supporting specific processing/operation/control/information for at least one of the above-described embodiments;
- supporting dynamic switching between a Rel-15 DMRS port (table) and a Rel-18 DMRS port (table);
- supporting PUSCH transmission / PDSCH reception with more than 4 layers, based on a single symbol DMRS;
- supporting DMRS ports to be increased for SU-MIMO (for example, for more than 4 layers for DMRS type 1, for more than 6 layers for DMRS type 2); and
- supporting DMRS ports to be increased for MU-MIMO (for example, for more than 4 layers for DMRS type 1, for more than 6 layers for DMRS type 2).

The specific UE capability described above may be capability applied across all the frequencies (commonly irrespective of frequency), capability per frequency (for example, one or combinations of a cell, a band, a band combination, a BWP, a component carrier, and the like), capability per frequency range (for example, Frequency Range 1 (FR1), FR2, FR3, FR4, FR5, FR2-1, FR2-2), capability per subcarrier spacing (SCS), or capability per Feature Set (FS) or Feature Set Per Component-carrier (FSPC).

The specific UE capability described above may be capability applied over all the duplex schemes (commonly irrespective of duplex scheme) or capability per duplex scheme (for example, time division duplex (TDD) or frequency division duplex (FDD)).

At least one of the above-described embodiments may be applied to a case where specific information associated with the above-described embodiments (or operation for the above-described embodiments) is configured/activated/triggered for the UE by higher layer signaling / physical layer signaling. For example, the specific information may be information indicating enabling of dynamic switching between DMRS ports, information indicating enabling of dynamic switching between DMRS ports of specific release (for example, a Rel-15 DMRS port and a Rel-18 DMRS port), information indicating enabling of dynamic switching between antenna port indication tables, information indicating enabling of DMRS ports to be increased, configuration information with DMRS type 1 (or 2) / single-symbol DMRS / maximum DMRS length = 1, any RRC parameter for specific release (for example, Rel. 18/19), or the like.

In a case where the UE does not support at least one of the specific UE capability or is not configured with the specific information, the UE may apply, for example, Rel-15/16 operation.

### (Supplementary Note)

Regarding one embodiment of the present disclosure, the following supplementary notes of the invention will be given.

### {Supplementary Note 1}

A terminal including:
a receiving section that receives downlink control information (DCI) for scheduling an uplink shared channel; and
a control section that, when a maximum length of a demodulation reference signal (DMRS) for the uplink shared channel is 1, determines a combination of five or more ports for the DMRS, based on an antenna port field of the DCI.

### {Supplementary Note 2}

The terminal according to supplementary note 1, wherein when a type of the DMRS is 2 and the maximum length of the DMRS is 1, the control section determines, based on the antenna port field, a number of DMRS code division multiplexing (CDM) groups without data, from among 2 and 3.

### (Supplementary Note)

Regarding one embodiment of the present disclosure, the following supplementary notes of the invention will be given.

### {Supplementary Note 1}

A terminal including:
a receiving section that receives downlink control information (DCI) for scheduling a downlink shared channel; and
a control section that, when a maximum length of a demodulation reference signal (DMRS) for the downlink shared channel is 1, determines a combination of five or more ports for the DMRS, based on an antenna port field of the DCI.

### {Supplementary Note 2}

The terminal according to supplementary note 1, wherein when a type of the DMRS is 2 and the maximum length of the DMRS is 1, the control section determines, based on the antenna port field, a number of DMRS code division multiplexing (CDM) groups without data, from among 2 and 3.

### (Radio Communication System)

Hereinafter, a structure of a radio communication system according to one embodiment of the present disclosure will be described. In this radio communication system, the radio communication method according to each embodiment of the present disclosure described above may be used alone or may be used in combination for communication.

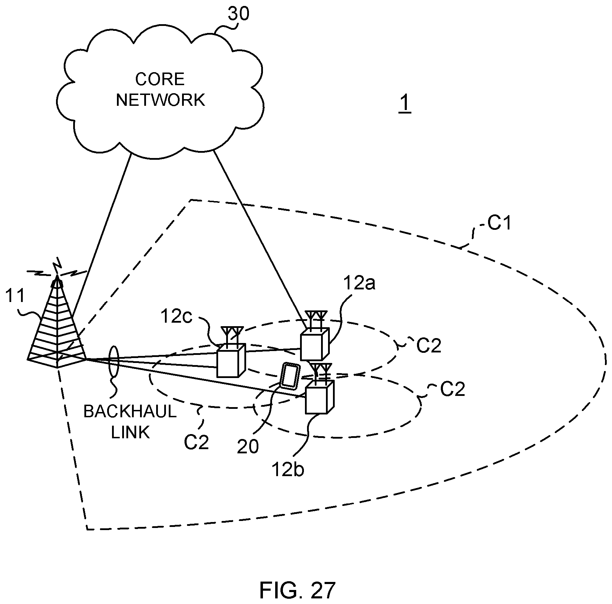

FIG. 27 is a diagram to show an example of a schematic structure of the radio communication system according to one embodiment. The radio communication system 1 (which may be simply referred to as system 1) may be a system implementing a communication using Long Term Evolution (LTE), 5th generation mobile communication system New Radio (5G NR) and so on the specifications of which have been drafted by Third Generation Partnership Project (3GPP).

The radio communication system 1 may support dual connectivity (multi-RAT dual connectivity (MR-DC)) between a plurality of Radio Access Technologies (RATs). The MR-DC may include dual connectivity (E-UTRA-NR Dual Connectivity (EN-DC)) between LTE (Evolved Universal Terrestrial Radio Access (E-UTRA)) and NR, dual connectivity (NR-E-UTRA Dual Connectivity (NE-DC)) between NR and LTE, and so on.

In EN-DC, a base station (eNB) of LTE (E-UTRA) is a master node (MN), and a base station (gNB) of NR is a secondary node (SN). In NE-DC, a base station (gNB) of NR is an MN, and a base station (eNB) of LTE (E-UTRA) is an SN.

The radio communication system 1 may support dual connectivity between a plurality of base stations in the same RAT (for example, dual connectivity (NR-NR Dual Connectivity (NN-DC)) where both of an MN and an SN are base stations (gNB) of NR).

The radio communication system 1 may include a base station 11 that forms a macro cell C1 of a relatively wide coverage, and base stations 12 (12a to 12c) that form small cells C2, which are placed within the macro cell C1 and which are narrower than the macro cell C1. The user terminal 20 may be located in at least one cell. The arrangement, the number, and the like of each cell and user terminal 20 are by no means limited to the aspect shown in the diagram. Hereinafter, the base stations 11 and 12 will be collectively referred to as "base stations 10," unless specified otherwise.

The user terminal 20 may be connected to at least one of the plurality of base stations 10. The user terminal 20 may use at least one of carrier aggregation (CA) and dual connectivity (DC) using a plurality of component carriers (CCs).

Each CC may be included in at least one of a first frequency band (Frequency Range 1 (FR1)) and a second frequency band (Frequency Range 2 (FR2)). The macro cell C1 may be included in FR1, and the small cells C2 may be included in FR2. For example, FR1 may be a frequency band of 6 GHz or less (sub-6 GHz), and FR2 may be a frequency band which is higher than 24 GHz (above-24 GHz). Note that frequency bands, definitions and so on of FR1 and FR2 are by no means limited to these, and for example, FR1 may correspond to a frequency band which is higher than FR2.

The user terminal 20 may communicate using at least one of time division duplex (TDD) and frequency division duplex (FDD) in each CC.

The plurality of base stations 10 may be connected by a wired connection (for example, optical fiber in compliance with the Common Public Radio Interface (CPRI), the X2 interface and so on) or a wireless connection (for example, an NR communication). For example, if an NR communication is used as a backhaul between the base stations 11 and 12, the base station 11 corresponding to a higher station may be referred to as an "Integrated Access Backhaul (IAB) donor," and the base station 12 corresponding to a relay station (relay) may be referred to as an "IAB node."

The base station 10 may be connected to a core network 30 through another base station 10 or directly. For example, the core network 30 may include at least one of Evolved Packet Core (EPC), 5G Core Network (5GCN), Next Generation Core (NGC), and so on.

The core network 30 may include network functions (NF), such as a User Plane Function (UPF), an Access and Mobility management Function (AMF), a Session Management Function (SMF), Unified Data Management (UDM), an Application Function (AF), a Data Network (DN), a Location Management Function (LMF), and operation, administration, and maintenance (Management) (OAM). Note that a plurality of functions may be provided by one network node. Communication with an external network (for example, the Internet) may be performed via the DN.

The user terminal 20 may be a terminal supporting at least one of communication schemes such as LTE, LTE-A, 5G, and so on.

In the radio communication system 1, an orthogonal frequency division multiplexing (OFDM)-based wireless access scheme may be used. For example, in at least one of the downlink (DL) and the uplink (UL), Cyclic Prefix OFDM (CP-OFDM), Discrete Fourier Transform Spread OFDM (DFT-s-OFDM), Orthogonal Frequency Division Multiple Access (OFDMA), Single Carrier Frequency Division Multiple Access (SC-FDMA), and so on may be used.

The wireless access scheme may be referred to as a "waveform." Note that, in the radio communication system 1, another wireless access scheme (for example, another single carrier transmission scheme, another multi-carrier transmission scheme) may be used for a wireless access scheme in the UL and the DL.

In the radio communication system 1, a downlink shared channel (Physical Downlink Shared Channel (PDSCH)), which is used by each user terminal 20 on a shared basis, a broadcast channel (Physical Broadcast Channel (PBCH)), a downlink control channel (Physical Downlink Control Channel (PDCCH)) and so on, may be used as downlink channels.

In the radio communication system 1, an uplink shared channel (Physical Uplink Shared Channel (PUSCH)), which is used by each user terminal 20 on a shared basis, an uplink control channel (Physical Uplink Control Channel (PUCCH)), a random access channel (Physical Random Access Channel (PRACH)) and so on may be used as uplink channels.

User data, higher layer control information, System Information Blocks (SIBs) and so on are communicated on the PDSCH. User data, higher layer control information and so on may be communicated on the PUSCH. The Master Information Blocks (MIBs) may be communicated on the PBCH.

Lower layer control information may be communicated on the PDCCH. For example, the lower layer control information may include downlink control information (DCI) including scheduling information of at least one of the PDSCH and the PUSCH.

Note that DCI for scheduling the PDSCH may be referred to as "DL assignment," "DL DCI," and so on, and DCI for scheduling the PUSCH may be referred to as "UL grant," "UL DCI," and so on. Note that the PDSCH may be interpreted as "DL data", and the PUSCH may be interpreted as "UL data".

For detection of the PDCCH, a control resource set (CORESET) and a search space may be used. The CORESET corresponds to a resource to search DCI. The search space corresponds to a search area and a search method of PDCCH candidates. One CORESET may be associated with one or more search spaces. The UE may monitor a CORESET associated with a given search space, based on search space configuration.

One search space may correspond to a PDCCH candidate corresponding to one or more aggregation levels. One or more search spaces may be referred to as a "search space set." Note that a "search space," a "search space set," a "search space configuration," a "search space set configuration," a "CORESET," a "CORESET configuration" and so on of the present disclosure may be interchangeably interpreted.

Uplink control information (UCI) including at least one of channel state information (CSI), transmission confirmation information (for example, which may be referred to as Hybrid Automatic Repeat reQuest ACKnowledgement (HARQ-ACK), ACK/NACK, and so on), and scheduling request (SR) may be communicated by means of the PUCCH. By means of the PRACH, random access preambles for establishing connections with cells may be communicated.

Note that the downlink, the uplink, and so on in the present disclosure may be expressed without a term of "link." In addition, various channels may be expressed without adding "Physical" to the head.

In the radio communication system 1, a synchronization signal (SS), a downlink reference signal (DL-RS), and so on may be communicated. In the radio communication system 1, a cell-specific reference signal (CRS), a channel state information-reference signal (CSI-RS), a demodulation reference signal (DMRS), a positioning reference signal (PRS), a phase tracking reference signal (PTRS), and so on may be communicated as the DL-RS.

For example, the synchronization signal may be at least one of a primary synchronization signal (PSS) and a secondary synchronization signal (SSS). A signal block including an SS (PSS, SSS) and a PBCH (and a DMRS for a PBCH) may be referred to as an "SS/PBCH block," an "SS Block (SSB)," and so on. Note that an SS, an SSB, and so on may be referred to as a "reference signal."

In the radio communication system 1, a sounding reference signal (SRS), a demodulation reference signal (DMRS), and so on may be communicated as an uplink reference signal (UL-RS). Note that DMRS may be referred to as a "user terminal specific reference signal (UE-specific Reference Signal)."

### (Base Station)

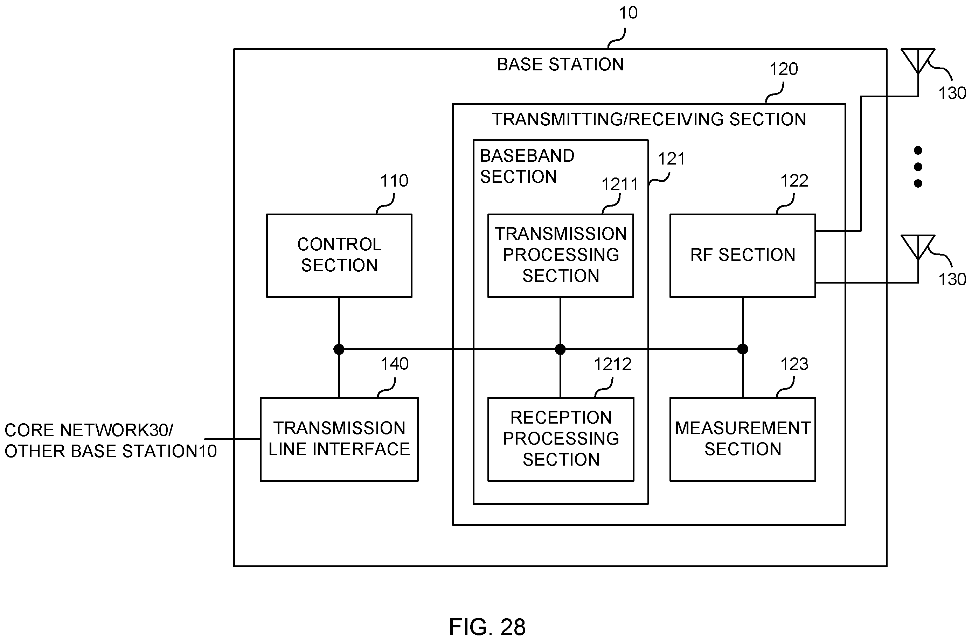

FIG. 28 is a diagram to show an example of a structure of the base station according to one embodiment. The base station 10 includes a control section 110, a transmitting/receiving section 120, transmitting/receiving antennas 130 and a communication path interface (transmission line interface) 140. Note that the base station 10 may include one or more control sections 110, one or more transmitting/receiving sections 120, one or more transmitting/receiving antennas 130, and one or more communication path interfaces 140.

Note that, the present example primarily shows functional blocks that pertain to characteristic parts of the present embodiment, and it is assumed that the base station 10 may include other functional blocks that are necessary for radio communication as well. Part of the processes of each section described below may be omitted.

The control section 110 controls the whole of the base station 10. The control section 110 can be constituted with a controller, a control circuit, or the like described based on general understanding of the technical field to which the present disclosure pertains.

The control section 110 may control generation of signals, scheduling (for example, resource allocation, mapping), and so on. The control section 110 may control transmission and reception, measurement and so on using the transmitting/receiving section 120, the transmitting/receiving antennas 130, and the communication path interface 140. The control section 110 may generate data, control information, a sequence and so on to transmit as a signal, and forward the generated items to the transmitting/receiving section 120. The control section 110 may perform call processing (setting up, releasing) for communication channels, manage the state of the base station 10, and manage the radio resources.

The transmitting/receiving section 120 may include a baseband section 121, a Radio Frequency (RF) section 122, and a measurement section 123. The baseband section 121 may include a transmission processing section 1211 and a reception processing section 1212. The transmitting/receiving section 120 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 120 may be structured as a transmitting/receiving section in one entity, or may be constituted with a transmitting section and a receiving section. The transmitting section may be constituted with the transmission processing section 1211, and the RF section 122. The receiving section may be constituted with the reception processing section 1212, the RF section 122, and the measurement section 123.

The transmitting/receiving antennas 130 can be constituted with antennas, for example, an array antenna, or the like described based on general understanding of the technical field to which the present disclosure pertains.

The transmitting/receiving section 120 may transmit the above-described downlink channel, synchronization signal, downlink reference signal, and so on. The transmitting/receiving section 120 may receive the above-described uplink channel, uplink reference signal, and so on.

The transmitting/receiving section 120 may form at least one of a transmit beam and a receive beam by using digital beam forming (for example, precoding), analog beam forming (for example, phase rotation), and so on.

The transmitting/receiving section 120 (transmission processing section 1211) may perform the processing of the Packet Data Convergence Protocol (PDCP) layer, the processing of the Radio Link Control (RLC) layer (for example, RLC retransmission control), the processing of the Medium Access Control (MAC) layer (for example, HARQ retransmission control), and so on, for example, on data and control information and so on acquired from the control section 110, and may generate bit string to transmit.

The transmitting/receiving section 120 (transmission processing section 1211) may perform transmission processing such as channel coding (which may include error correction coding), modulation, mapping, filtering, discrete Fourier transform (DFT) processing (as necessary), inverse fast Fourier transform (IFFT) processing, precoding, digital-to-analog conversion, and so on, on the bit string to transmit, and output a baseband signal.

The transmitting/receiving section 120 (RF section 122) may perform modulation to a radio frequency band, filtering, amplification, and so on, on the baseband signal, and transmit the signal of the radio frequency band through the transmitting/receiving antennas 130.

On the other hand, the transmitting/receiving section 120 (RF section 122) may perform amplification, filtering, demodulation to a baseband signal, and so on, on the signal of the radio frequency band received by the transmitting/receiving antennas 130.

The transmitting/receiving section 120 (reception processing section 1212) may apply reception processing such as analog-digital conversion, fast Fourier transform (FFT) processing, inverse discrete Fourier transform (IDFT) processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 120 (measurement section 123) may perform the measurement related to the received signal. For example, the measurement section 123 may perform Radio Resource Management (RRM) measurement, Channel State Information (CSI) measurement, and so on, based on the received signal. The measurement section 123 may measure a received power (for example, Reference Signal Received Power (RSRP)), a received quality (for example, Reference Signal Received Quality (RSRQ), a Signal to Interference plus Noise Ratio (SINR), a Signal to Noise Ratio (SNR)), a signal strength (for example, Received Signal Strength Indicator (RSSI)), channel information (for example, CSI), and so on. The measurement results may be output to the control section 110.

The communication path interface 140 may perform transmission/reception (backhaul signaling) of a signal with an apparatus included in the core network 30 (for example, a network node providing NF) or other base stations 10, and so on, and acquire or transmit user data (user plane data), control plane data, and so on for the user terminal 20.

Note that the transmitting section and the receiving section of the base station 10 in the present disclosure may be constituted with at least one of the transmitting/receiving section 120, the transmitting/receiving antennas 130, and the communication path interface 140.

Note that the transmitting/receiving section 120 may transmit, to the user terminal 20, downlink control information (DCI) for scheduling an uplink shared channel (PUSCH). When a maximum length of a demodulation reference signal (DMRS) for the uplink shared channel is 1, the control section 110 may perform control to receive the uplink shared channel, based on a combination of five or more ports for the DMRS determined based on an antenna port field of the DCI.

The transmitting/receiving section 120 may transmit, to the user terminal 20, downlink control information (DCI) for scheduling a downlink shared channel (PDSCH). When a maximum length of a demodulation reference signal (DMRS) for the downlink shared channel is 1, the control section 110 may perform control to transmit the downlink shared channel, based on a combination of five or more ports for the DMRS determined based on an antenna port field of the DCI.

### (User Terminal)

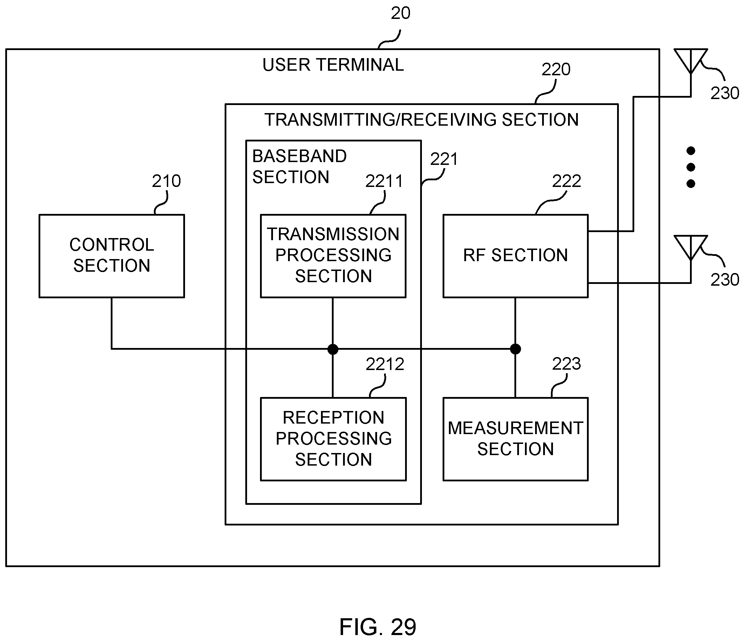

FIG. 29 is a diagram to show an example of a structure of the user terminal according to one embodiment. The user terminal 20 includes a control section 210, a transmitting/receiving section 220, and transmitting/receiving antennas 230. Note that the user terminal 20 may include one or more control sections 210, one or more transmitting/receiving sections 220, and one or more transmitting/receiving antennas 230.

Note that, the present example primarily shows functional blocks that pertain to characteristic parts of the present embodiment, and it is assumed that the user terminal 20 may include other functional blocks that are necessary for radio communication as well. Part of the processes of each section described below may be omitted.

The control section 210 controls the whole of the user terminal 20. The control section 210 can be constituted with a controller, a control circuit, or the like described based on general understanding of the technical field to which the present disclosure pertains.

The control section 210 may control generation of signals, mapping, and so on. The control section 210 may control transmission/reception, measurement and so on using the transmitting/receiving section 220, and the transmitting/receiving antennas 230. The control section 210 generates data, control information, a sequence and so on to transmit as a signal, and may forward the generated items to the transmitting/receiving section 220.

The transmitting/receiving section 220 may include a baseband section 221, an RF section 222, and a measurement section 223. The baseband section 221 may include a transmission processing section 2211 and a reception processing section 2212. The transmitting/receiving section 220 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 220 may be structured as a transmitting/receiving section in one entity, or may be constituted with a transmitting section and a receiving section. The transmitting section may be constituted with the transmission processing section 2211, and the RF section 222. The receiving section may be constituted with the reception processing section 2212, the RF section 222, and the measurement section 223.

The transmitting/receiving antennas 230 can be constituted with antennas, for example, an array antenna, or the like described based on general understanding of the technical field to which the present disclosure pertains.

The transmitting/receiving section 220 may receive the above-described downlink channel, synchronization signal, downlink reference signal, and so on. The transmitting/receiving section 220 may transmit the above-described uplink channel, uplink reference signal, and so on.

The transmitting/receiving section 220 may form at least one of a transmit beam and a receive beam by using digital beam forming (for example, precoding), analog beam forming (for example, phase rotation), and so on.

The transmitting/receiving section 220 (transmission processing section 2211) may perform the processing of the PDCP layer, the processing of the RLC layer (for example, RLC retransmission control), the processing of the MAC layer (for example, HARQ retransmission control), and so on, for example, on data and control information and so on acquired from the control section 210, and may generate bit string to transmit.

The transmitting/receiving section 220 (transmission processing section 2211) may perform transmission processing such as channel coding (which may include error correction coding), modulation, mapping, filtering, DFT processing (as necessary), IFFT processing, precoding, digital-to-analog conversion, and so on, on the bit string to transmit, and output a baseband signal.

Note that, whether to apply DFT processing or not may be based on the configuration of the transform precoding. The transmitting/receiving section 220 (transmission processing section 2211) may perform, for a given channel (for example, PUSCH), the DFT processing as the above-described transmission processing to transmit the channel by using a DFT-s-OFDM waveform if transform precoding is enabled, and otherwise, does not need to perform the DFT processing as the above-described transmission processing.

The transmitting/receiving section 220 (RF section 222) may perform modulation to a radio frequency band, filtering, amplification, and so on, on the baseband signal, and transmit the signal of the radio frequency band through the transmitting/receiving antennas 230.

On the other hand, the transmitting/receiving section 220 (RF section 222) may perform amplification, filtering, demodulation to a baseband signal, and so on, on the signal of the radio frequency band received by the transmitting/receiving antennas 230.

The transmitting/receiving section 220 (reception processing section 2212) may apply reception processing such as analog-digital conversion, FFT processing, IDFT processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 220 (measurement section 223) may perform the measurement related to the received signal. For example, the measurement section 223 may perform RRM measurement, CSI measurement, and so on, based on the received signal. The measurement section 223 may measure a received power (for example, RSRP), a received quality (for example, RSRQ, SINR, SNR), a signal strength (for example, RSSI), channel information (for example, CSI), and so on. The measurement results may be output to the control section 210.

Note that the transmitting section and the receiving section of the user terminal 20 in the present disclosure may be constituted with at least one of the transmitting/receiving section 220 and the transmitting/receiving antennas 230.

Note that the transmitting/receiving section 220 may receive downlink control information (DCI) for scheduling an uplink shared channel (PUSCH). When a maximum length of a demodulation reference signal (DMRS) for the uplink shared channel is 1, the control section 210 may determine a combination of five or more ports for the DMRS, based on an antenna port field of the DCI.

When a type of the DMRS is 2 and the maximum length of the DMRS is 1, the control section 210 may determine, based on the antenna port field, a number of DMRS code division multiplexing (CDM) groups without data, from among 2 and 3. For example, for the same combination, a number of CDM groups without data = 2 or 3 may be selectable depending on a value of the antenna port field.

The transmitting/receiving section 220 may receive downlink control information (DCI) for scheduling a downlink shared channel (PDSCH). When a maximum length of a demodulation reference signal (DMRS) for the downlink shared channel is 1, the control section 210 may determine a combination of five or more ports for the DMRS, based on an antenna port field of the DCI.

When a type of the DMRS is 2 and the maximum length of the DMRS is 1, the control section 210 may determine, based on the antenna port field, a number of DMRS code division multiplexing (CDM) groups without data, from among 2 and 3. For example, for the same combination, a number of CDM groups without data = 2 or 3 may be selectable depending on a value of the antenna port field.

### (Hardware Structure)

Note that the block diagrams that have been used to describe the above embodiments show blocks in functional units. These functional blocks (components) may be implemented in arbitrary combinations of at least one of hardware and software. Also, the method for implementing each functional block is not particularly limited. That is, each functional block may be realized by one piece of apparatus that is physically or logically coupled, or may be realized by directly or indirectly connecting two or more physically or logically separate apparatuses (for example, via wire, wireless, or the like) and using these apparatuses. The functional blocks may be implemented by combining software into the apparatus described above or the plurality of apparatuses described above.

Here, functions include judgment, determination, decision, calculation, computation, processing, derivation, investigation, search, confirmation, reception, transmission, output, access, resolution, selection, designation, establishment, comparison, assumption, expectation, considering, broadcasting, notifying, communicating, forwarding, configuring, reconfiguring, allocating (mapping), assigning, and the like, but functions are by no means limited to these. For example, a functional block (component) to implement a function of transmission may be referred to as a "transmitting section (transmitting unit)", a "transmitter", or the like. The method for implementing each component is not particularly limited as described above.

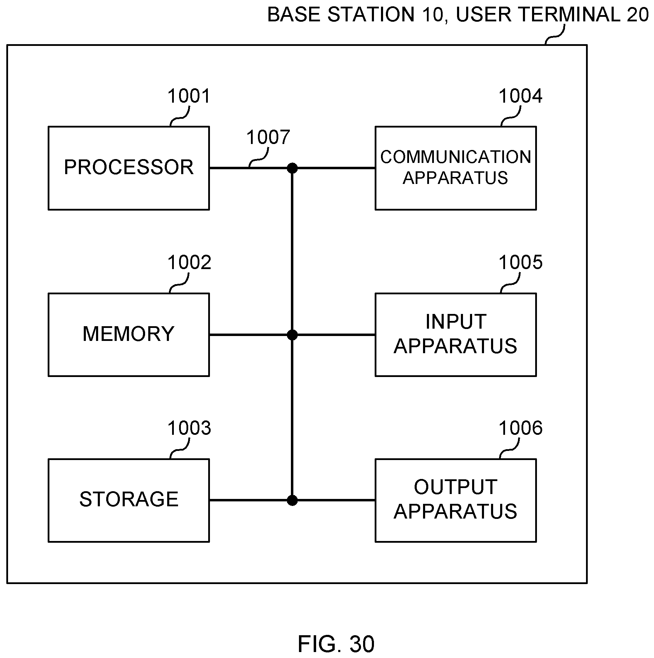

For example, a base station, a user terminal, and so on according to one embodiment of the present disclosure may function as a computer that executes the processes of the radio communication method of the present disclosure. FIG. 30 is a diagram to show an example of a hardware structure of the base station and the user terminal according to one embodiment. Physically, the above-described base station 10 and user terminal 20 may each be formed as a computer apparatus that includes a processor 1001, a memory 1002, a storage 1003, a communication apparatus 1004, an input apparatus 1005, an output apparatus 1006, a bus 1007, and so on.

Note that in the present disclosure, the words such as an apparatus, a circuit, a device, a section, a unit, and so on can be interchangeably used. The hardware structure of the base station 10 and the user terminal 20 may be configured to include one or more of apparatuses shown in the drawings, or may be configured not to include part of apparatuses.

For example, although one processor 1001 is shown in the drawings, a plurality of processors may be provided. Furthermore, processes may be implemented with one processor or may be implemented at the same time, in sequence, or in different manners with two or more processors. Note that the processor 1001 may be implemented with one or more chips.

Each function of the base station 10 and the user terminal 20 is implemented, for example, by allowing given software (programs) to be read on hardware such as the processor 1001 and the memory 1002, and by allowing the processor 1001 to perform calculations to control communication via the communication apparatus 1004 and control at least one of reading and writing of data in the memory 1002 and the storage 1003.

The processor 1001 controls the whole computer by, for example, running an operating system. The processor 1001 may be configured with a central processing unit (CPU), which includes interfaces with peripheral apparatus, control apparatus, computing apparatus, a register, and so on. For example, at least a part of the control section 110 (210), the transmitting/receiving section 120 (220), and so on may be implemented by the processor 1001.

Furthermore, the processor 1001 reads programs (program codes), software modules, data, and so on from at least one of the storage 1003 and the communication apparatus 1004, into the memory 1002, and executes various processes according to these. As for the programs, programs to allow computers to execute at least a part of the operations explained in the above-described embodiments are used. For example, the control section 110 (210) may be implemented by control programs that are stored in the memory 1002 and that operate on the processor 1001, and other functional blocks may be implemented likewise.

The memory 1002 is a computer-readable recording medium, and may be constituted with, for example, at least one of a Read Only Memory (ROM), an Erasable Programmable ROM (EPROM), an Electrically EPROM (EEPROM), a Random Access Memory (RAM), and other appropriate storage media. The memory 1002 may be referred to as a "register", a "cache", a "main memory (primary storage apparatus)" and so on. The memory 1002 can store executable programs (program codes), software modules, and the like for implementing the radio communication method according to one embodiment of the present disclosure.

The storage 1003 is a computer-readable recording medium, and may be constituted with, for example, at least one of a flexible disk, a floppy (registered trademark) disk, a magneto-optical disk (for example, a compact disc (Compact Disc ROM (CD-ROM) and so on), a digital versatile disc, a Blu-ray (registered trademark) disk), a removable disk, a hard disk drive, a smart card, a flash memory device (for example, a card, a stick, and a key drive), a magnetic stripe, a database, a server, and other appropriate storage media. The storage 1003 may be referred to as "auxiliary storage apparatus".

The communication apparatus 1004 is hardware (transmitting/receiving device) for allowing inter-computer communication via at least one of wired and wireless networks, and may be referred to as, for example, a "network device", a "network controller", a "network card", a "communication module", and so on. The communication apparatus 1004 may be configured to include a high frequency switch, a duplexer, a filter, a frequency synthesizer, and so on in order to realize, for example, at least one of frequency division duplex (FDD) and time division duplex (TDD). For example, the transmitting/receiving section 120 (220), the transmitting/receiving antenna 130 (230), and so on may be implemented by the communication apparatus 1004. In the transmitting/receiving section 120 (220), the transmitting section 120a (220a) and the receiving section 120b (220b) can be implemented while being separated physically or logically.

The input apparatus 1005 is an input device that receives input from the outside (for example, a keyboard, a mouse, a microphone, a switch, a button, a sensor or the like). The output apparatus 1006 is an output device that allows sending output to the outside (for example, a display, a speaker, a Light Emitting Diode (LED) lamp or the like). Note that the input apparatus 1005 and the output apparatus 1006 may be provided in an integrated structure (for example, a touch panel).

Furthermore, these types of apparatus, including the processor 1001, the memory 1002, and others, are connected by a bus 1007 for communicating information. The bus 1007 may be formed with a single bus, or may be formed with buses that vary between apparatuses.

Also, the base station 10 and the user terminal 20 may be structured to include hardware such as a microprocessor, a Digital Signal Processor (DSP), an Application Specific Integrated Circuit (ASIC), a Programmable Logic Device (PLD), a Field Programmable Gate Array (FPGA), and so on, and a part or all of the functional blocks may be implemented by the hardware. For example, the processor 1001 may be implemented with at least one of these pieces of hardware.

### (Variations)

It should be noted that a term used in the present disclosure and a term required for understanding of the present disclosure may be replaced by a term having the same or similar meaning. For example, a channel, a symbol, and a signal (or signaling) may be interchangeably used. Further, a signal may be a message. A reference signal may be abbreviated as an RS, and may be referred to as a pilot, a pilot signal or the like, depending on which standard applies. Furthermore, a component carrier (CC) may be referred to as a cell, a frequency carrier, a carrier frequency and so on.

A radio frame may be constituted of one or a plurality of periods (frames) in the time domain. Each of one or a plurality of periods (frames) constituting a radio frame may be referred to as a "subframe". Furthermore, a subframe may be constituted of one or a plurality of slots in the time domain. A subframe may be a fixed time length (for example, 1 ms) independent of numerology.

Here, numerology may be a communication parameter applied to at least one of transmission and reception of a given signal or channel. For example, numerology may indicate at least one of a subcarrier spacing (SCS), a bandwidth, a symbol length, a cyclic prefix length, a transmission time interval (TTI), the number of symbols per TTI, a radio frame structure, a specific filter processing performed by a transceiver in the frequency domain, a specific windowing processing performed by a transceiver in the time domain, and so on.

A slot may be constituted of one or a plurality of symbols in the time domain (Orthogonal Frequency Division Multiplexing (OFDM) symbols, Single Carrier Frequency Division Multiple Access (SC-FDMA) symbols, and so on). Furthermore, a slot may be a time unit based on numerology.

A slot may include a plurality of mini-slots. Each mini-slot may be constituted of one or a plurality of symbols in the time domain. A mini-slot may be referred to as a "sub-slot". A mini-slot may be constituted of symbols in number less than the slot. A PDSCH (or PUSCH) transmitted in a time unit larger than a mini-slot may be referred to as "PDSCH (PUSCH) mapping type A". A PDSCH (or PUSCH) transmitted using a mini-slot may be referred to as "PDSCH (PUSCH) mapping type B".

A radio frame, a subframe, a slot, a mini-slot, and a symbol all express time units in signal communication. A radio frame, a subframe, a slot, a mini-slot, and a symbol may each be called by other applicable terms. Note that time units such as a frame, a subframe, a slot, mini-slot, and a symbol in the present disclosure may be interchangeably used.

For example, one subframe may be referred to as a "TTI", a plurality of consecutive subframes may be referred to as a "TTI", or one slot or one mini-slot may be referred to as a "TTI". In other words, at least one of a subframe and a TTI may be a subframe (1 ms) in existing LTE, may be a period shorter than 1 ms (for example, 1 to 13 symbols), or may be a period longer than 1 ms. Note that a unit expressing TTI may be referred to as a "slot", a "mini-slot", or the like, instead of a "subframe".

Here, a TTI refers to the minimum time unit of scheduling in radio communication, for example. For example, in LTE systems, a base station performs, for user terminals, scheduling of allocating of radio resources (such as a frequency bandwidth and transmit power that are available for each user terminal) in TTI units. Note that the definition of TTIs is not limited to this.

The TTI may be a transmission time unit for channel-encoded data packets (transport blocks), code blocks, codewords, or the like, or may be a unit of processing in scheduling, link adaptation, or the like. Note that, when a TTI is given, a time interval (for example, the number of symbols) to which transport blocks, code blocks, codewords, or the like are actually mapped may be shorter than the TTI.

Note that, in the case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a "normal TTI" (TTI in 3GPP Rel. 8 to Rel. 12), a "long TTI", a "normal subframe", a "long subframe", a "slot" and so on. A TTI that is shorter than a normal TTI may be referred to as a "shortened TTI", a "short TTI", a "partial or fractional TTI", a "shortened subframe", a "short subframe", a "mini-slot", a "sub-slot", a "slot" and so on.

Note that a long TTI (for example, a normal TTI, a subframe, and so on) may be interpreted as a TTI having a time length exceeding 1 ms, and a short TTI (for example, a shortened TTI and so on) may be interpreted as a TTI having a TTI length shorter than the TTI length of a long TTI and equal to or longer than 1 ms.

A resource block (RB) is the unit of resource allocation in the time domain and the frequency domain, and may include one or a plurality of consecutive subcarriers in the frequency domain. The number of subcarriers included in an RB may be the same regardless of numerology, and, for example, may be 12. The number of subcarriers included in an RB may be determined based on numerology.

Also, an RB may include one or a plurality of symbols in the time domain, and may be one slot, one mini-slot, one subframe, or one TTI in length. One TTI, one subframe, and so on each may be constituted of one or a plurality of resource blocks.

Note that one or a plurality of RBs may be referred to as a "physical resource block (Physical RB (PRB))", a "sub-carrier group (SCG)", a "resource element group (REG)", a "PRB pair", an "RB pair" and so on.

Furthermore, a resource block may be constituted of one or a plurality of resource elements (REs). For example, one RE may correspond to a radio resource field of one subcarrier and one symbol.

A bandwidth part (BWP) (which may be referred to as a "fractional bandwidth", and so on) may represent a subset of contiguous common resource blocks (common RBs) for given numerology in a given carrier. Here, a common RB may be specified by an index of the RB based on the common reference point of the carrier. A PRB may be defined by a given BWP and may be numbered in the BWP.

The BWP may include a UL BWP (BWP for UL) and a DL BWP (BWP for DL). One or a plurality of BWPs may be configured in one carrier for a UE.

At least one of configured BWPs may be active, and a UE may not need to assume to transmit/receive a given signal/channel outside the active BWP(s). Note that a "cell", a "carrier", and so on in the present disclosure may be used interchangeably with a "BWP".

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

Further, the information, parameters, and so on described in the present disclosure may be expressed using absolute values or relative values with respect to given values, or may be expressed using another corresponding information. For example, a radio resource may be specified by a given index.

The names used for parameters and so on in the present disclosure are in no respect used as limitations. Furthermore, mathematical expressions that use these parameters, and so on may be different from those explicitly disclosed in the present disclosure. Since various channels (PUCCH, PDCCH, and so on) and information elements may be identified by any suitable names, the various names allocated to these various channels and information elements are in no respect used as limitations.

The information, signals, and so on described in the present disclosure may be represented by using any of a variety of different technologies. For example, data, an instruction, a command, information, a signal, a bit, a symbol, a chip, and so on, described throughout the description of the present application, may be represented by a voltage, an electric current, electromagnetic waves, magnetic fields, a magnetic particle, optical fields, a photon, or any combination thereof.

Also, information, signals, and so on can be output at least one of from a higher layer to a lower layer and from a lower layer to a higher layer. Information, signals, and so on may be input and/or output via a plurality of network nodes.

The information, signals, and so on that are input and/or output may be stored in a specific location (for example, a memory) or may be managed by using a management table. The information, signals, and so on to be input and/or output can be overwritten, updated, or added. The information, signals, and so on that has been output may be deleted. The information, signals, and so on that has been input may be transmitted to another apparatus.

Notification of information is by no means limited to the aspects/embodiments described in the present disclosure, and other methods may be used as well. For example, notification of information in the present disclosure may be implemented by using physical layer signaling (for example, downlink control information (DCI), uplink control information (UCI)), higher layer signaling (for example, Radio Resource Control (RRC) signaling, broadcast information (master information block (MIB), system information block (SIB), and so on), Medium Access Control (MAC) signaling and so on), and other signals or combinations of these.

Note that physical layer signaling may be referred to as "Layer 1/Layer 2 (L1/L2) control information (L1/L2 control signals)", "L1 control information (L1 control signal)", and so on. Also, RRC signaling may be referred to as an "RRC message", and can be, for example, an RRC connection setup message, an RRC connection reconfiguration message, and so on. Also, MAC signaling may be notified using, for example, MAC control elements (MAC CEs).

Also, notification of given information (for example, notification of "X") does not necessarily have to be performed explicitly, and can be performed implicitly (by, for example, not reporting this given information or reporting another piece of information).

A decision may be realized by a value (0 or 1) represented by one bit, by a boolean value (true or false), or by comparison of numerical values (e.g., comparison with a given value).

Software, irrespective of whether referred to as "software", "firmware", "middleware", "microcode", or "hardware description language", or called by other terms, should be interpreted broadly to mean instructions, instruction sets, codes, code segments, program codes, programs, subprograms, software modules, applications, software applications, software packages, routines, subroutines, objects, executable files, execution threads, procedures, functions, and the like.

Also, software, instructions, information, and the like may be transmitted and received via a transmission medium. For example, when software is transmitted from a website, a server, or other remote sources by using at least one of wired technologies (coaxial cable, fiber optic cable, twisted-pair cable, digital subscriber line (DSL), and so on) and wireless technologies (infrared radiation, microwaves, and so on), at least one of these wired technologies and wireless technologies is also included in the definition of the transmission medium.

The terms "system" and "network" used in the present disclosure may be used interchangeably. The "network" may mean an apparatus (for example, a base station) included in the network.

In the present disclosure, the terms such as "precoding", a "precoder", a "weight (precoding weight)", "quasi-co-location (QCL)", a "Transmission Configuration Indication state (TCI state)", a "spatial relation", a "spatial domain filter", a "transmit power", "phase rotation", an "antenna port", an "antenna port group", a "layer", "the number of layers", a "rank", a "resource", a "resource set", a "resource group", a "beam", a "beam width", a "beam angular degree", an "antenna", an "antenna element", a "panel", and so on may be used interchangeably.

In the present disclosure, the terms such as a "base station (BS)", a "radio base station", a "fixed station," a "NodeB", an "eNB (eNodeB)", a "gNB (gNodeB)", an "access point", a "transmission point (TP)", a "reception point (RP)", a "transmission/reception point (TRP)", a "panel", a "cell", a "sector", a "cell group", a "carrier", a "component carrier", and so on can be used interchangeably. The base station may be referred to as the terms such as a "macro cell", a "small cell", a "femto cell", a "pico cell", and so on.

A base station can accommodate one or a plurality of (for example, three) cells. When a base station accommodates a plurality of cells, the entire coverage area of the base station can be partitioned into multiple smaller areas, and each smaller area can provide communication services through base station subsystems (for example, indoor small base stations (Remote Radio Heads (RRHs))). The term "cell" or "sector" refers to part of or the entire coverage area of at least one of a base station and a base station subsystem that provides communication services within this coverage.

In the present disclosure, transmitting information to the terminal by the base station may be interchangeably interpreted as instructing the terminal to perform control/operation based on the information by the base station.

In the present disclosure, the terms "mobile station (MS)", "user terminal", "user equipment (UE)", and "terminal" may be used interchangeably.

A mobile station may be referred to as a "subscriber station", "mobile unit", "subscriber unit", "wireless unit", "remote unit", "mobile device", "wireless device", "wireless communication device", "remote device", "mobile subscriber station", "access terminal", "mobile terminal", "wireless terminal", "remote terminal", "handset", "user agent", "mobile client", "client", or some other appropriate terms in some cases.

At least one of a base station and a mobile station may be referred to as a "transmitting apparatus", a "receiving apparatus", a "radio communication apparatus" or the like. Note that at least one of a base station and a mobile station may be a device mounted on a moving object or a moving object itself, and so on.

The moving object is a movable object with any moving speed, and naturally, it also includes a moving object stopped. Examples of the moving object include a vehicle, a transport vehicle, an automobile, a motorcycle, a bicycle, a connected car, a loading shovel, a bulldozer, a wheel loader, a dump truck, a fork lift, a train, a bus, a trolley, a rickshaw, a ship and other watercraft, an airplane, a rocket, a satellite, a drone, a multicopter, a quadcopter, a balloon, and an object mounted on any of these, but these are not restrictive. The moving object may be a moving object that autonomously travels based on a direction for moving.

The moving object may be a vehicle (for example, a car, an airplane, and the like), may be a moving object which moves unmanned (for example, a drone, an automatic operation car, and the like), or may be a robot (a manned type or unmanned type). Note that at least one of a base station and a mobile station also includes an apparatus which does not necessarily move during communication operation. For example, at least one of a base station and a mobile station may be an Internet of Things (IoT) device such as a sensor.

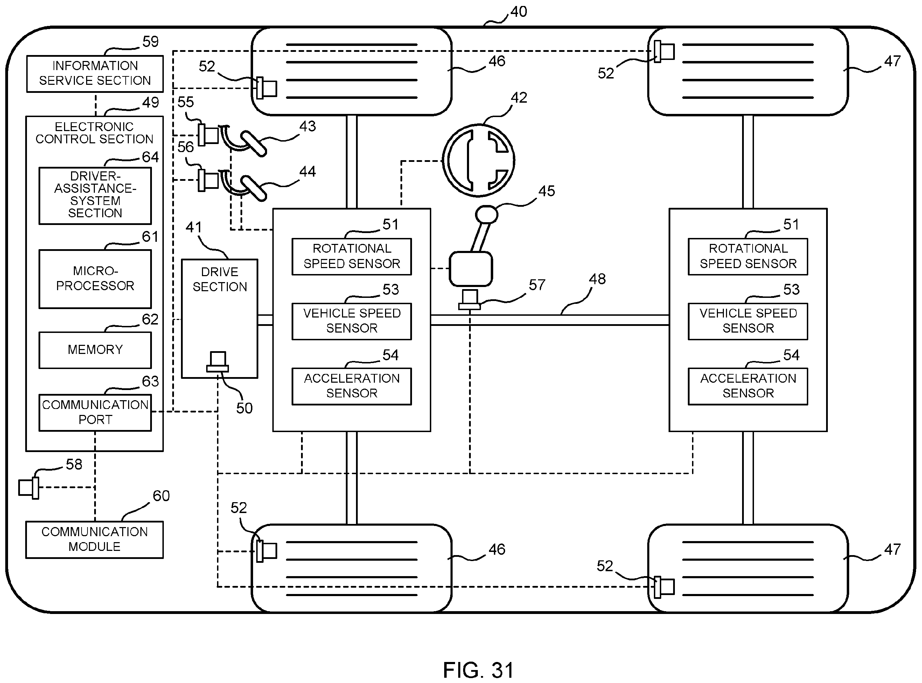

FIG. 31 is a diagram to show an example of a vehicle according to one embodiment. A vehicle 40 includes a driving section 41, a steering section 42, an accelerator pedal 43, a brake pedal 44, a shift lever 45, right and left front wheels 46, right and left rear wheels 47, an axle 48, an electronic control section 49, various sensors (including a current sensor 50, a rotational speed sensor 51, a pneumatic sensor 52, a vehicle speed sensor 53, an acceleration sensor 54, an accelerator pedal sensor 55, a brake pedal sensor 56, a shift lever sensor 57, and an object detection sensor 58), an information service section 59, and a communication module 60.

The driving section 41 includes, for example, at least one of an engine, a motor, and a hybrid of an engine and a motor. The steering section 42 includes at least a steering wheel (also referred to as a handle), and is configured to steer at least one of the front wheels 46 and the rear wheels 47, based on operation of the steering wheel operated by a user.

The electronic control section 49 includes a microprocessor 61, a memory (ROM, RAM) 62, and a communication port (for example, an input/output (IO) port) 63. The electronic control section 49 receives, as input, signals from the various sensors 50 to 58 provided in the vehicle. The electronic control section 49 may be referred to as an Electronic Control Unit (ECU).

Examples of the signals from the various sensors 50 to 58 include a current signal from the current sensor 50 for sensing current of a motor, a rotational speed signal of the front wheels 46/rear wheels 47 acquired by the rotational speed sensor 51, a pneumatic signal of the front wheels 46/rear wheels 47 acquired by the pneumatic sensor 52, a vehicle speed signal acquired by the vehicle speed sensor 53, an acceleration signal acquired by the acceleration sensor 54, a depressing amount signal of the accelerator pedal 43 acquired by the accelerator pedal sensor 55, a depressing amount signal of the brake pedal 44 acquired by the brake pedal sensor 56, an operation signal of the shift lever 45 acquired by the shift lever sensor 57, and a detection signal for detecting an obstruction, a vehicle, a pedestrian, and the like acquired by the object detection sensor 58.

The information service section 59 includes: various devices for providing (outputting) various pieces of information such as driving information, traffic information, and entertainment information, such as a car navigation system, an audio system, a speaker, a display, a television, and a radio; and one or more ECUs that control these devices. The information service section 59 provides various pieces of information/services (for example, multimedia information/multimedia service) to an occupant of the vehicle 40, using information acquired from an external apparatus via the communication module 60 and the like.

The information service section 59 may include an input device (for example, a keyboard, a mouse, a microphone, a switch, a button, a sensor, a touch panel, and the like) for receiving input from the outside, or may include an output device (for example, a display, a speaker, an LED lamp, a touch panel, and the like) for implementing output to the outside.

A driving assistance system section 64 includes: various devices for providing functions for preventing an accident and reducing a driver's driving load, such as a millimeter wave radar, Light Detection and Ranging (LiDAR), a camera, a positioning locator (for example, a Global Navigation Satellite System (GNSS) and the like), map information (for example, a high definition (HD) map, an autonomous vehicle (AV) map, and the like), a gyro system (for example, an inertial measurement apparatus (inertial measurement unit (IMU)), an inertial navigation apparatus (inertial navigation system (INS)), and the like), an artificial intelligence (AI) chip, and an AI processor; and one or more ECUs that control these devices. The driving assistance system section 64 transmits and receives various pieces of information via the communication module 60, and implements a driving assistance function or an autonomous driving function.

The communication module 60 can communicate with the microprocessor 61 and the constituent elements of the vehicle 40 via the communication port 63. For example, the communication module 60 transmits and receives data (information), via the communication port 63, to and from the driving section 41, the steering section 42, the accelerator pedal 43, the brake pedal 44, the shift lever 45, the right and left front wheels 46, the right and left rear wheels 47, the axle 48, the microprocessor 61 and the memory (ROM, RAM) 62 in the electronic control section 49, and the various sensors 50 to 58, which are included in the vehicle 40.

The communication module 60 is a communication device that can be controlled by the microprocessor 61 of the electronic control section 49 and that can perform communication with an external apparatus. For example, the communication module 60 performs transmission and reception of various pieces of information to and from the external apparatus via radio communication. The communication module 60 may be either inside or outside the electronic control section 49. The external apparatus may be, for example, the base station 10, the user terminal 20, or the like described above. The communication module 60 may be, for example, at least one of the base station 10 and the user terminal 20 described above (may function as at least one of the base station 10 and the user terminal 20).

The communication module 60 may transmit at least one of signals input from the various sensors 50 to 58 to the electronic control section 49, information obtained based on the signals, and information based on an input from the outside (a user) obtained via the information service section 59, to the external apparatus via radio communication. The electronic control section 49, the various sensors 50 to 58, the information service section 59, and the like may be referred to as input sections that receive input. For example, the PUSCH transmitted by the communication module 60 may include information based on the input.

The communication module 60 receives various pieces of information (traffic information, signal information, inter-vehicle distance information, and the like) transmitted from the external apparatus, and displays the received information on the information service section 59 included in the vehicle. The information service section 59 may be referred to as an output section that outputs information (for example, outputs information to devices, such as a display and a speaker, based on the PDSCH received by the communication module 60 (or data/information decoded from the PDSCH)).

The communication module 60 stores the various pieces of information received from the external apparatus in the memory 62 that can be used by the microprocessor 61. Based on the pieces of information stored in the memory 62, the microprocessor 61 may control the driving section 41, the steering section 42, the accelerator pedal 43, the brake pedal 44, the shift lever 45, the right and left front wheels 46, the right and left rear wheels 47, the axle 48, the various sensors 50 to 58, and the like provided in the vehicle 40.

Furthermore, the base station in the present disclosure may be interpreted as a user terminal. For example, each aspect/embodiment of the present disclosure may be applied to the structure that replaces a communication between a base station and a user terminal with a communication between a plurality of user terminals (for example, which may be referred to as "Device-to-Device (D2D)", "Vehicle-to-Everything (V2X)", and the like). In this case, user terminals 20 may have the functions of the base stations 10 described above. The words such as "uplink" and "downlink" may be interpreted as the words corresponding to the terminal-to-terminal communication (for example, "sidelink"). For example, an uplink channel, a downlink channel and so on may be interpreted as a sidelink channel.

Likewise, the user terminal in the present disclosure may be interpreted as a base station. In this case, the base station 10 may have the functions of the user terminal 20 described above.

Operations which have been described in the present disclosure to be performed by a base station may, in some cases, be performed by an upper node of the base station. In a network including one or a plurality of network nodes with base stations, it is clear that various operations that are performed to communicate with terminals can be performed by base stations, one or more network nodes (for example, Mobility Management Entities (MMEs), Serving-Gateways (S-GWs), and so on may be possible, but these are not limiting) other than base stations, or combinations of these.

Each aspect/embodiment described in the present disclosure may be used independently, may be used in combination, or may be switched depending on the mode of implementation. The order of processes, sequences, flowcharts, and so on that have been used to describe the aspects/embodiments in the present disclosure may be re-ordered as long as inconsistencies do not arise. For example, although various methods have been illustrated in the present disclosure with various components of steps in exemplary orders, the specific orders that are illustrated herein are by no means limiting.

The aspects/embodiments illustrated in the present disclosure may be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), 6th generation mobile communication system (6G), xth generation mobile communication system (xG (where x is, for example, an integer or a decimal)), Future Radio Access (FRA), New-Radio Access Technology (RAT), New Radio (NR), New radio access (NX), Future generation radio access (FX), Global System for Mobile communications (GSM (registered trademark)), CDMA 2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other adequate radio communication methods and next-generation systems that are enhanced, modified, created, or defined based on these. A plurality of systems may be combined (for example, a combination of LTE or LTE-A and 5G, and the like) for application.

The phrase "based on" (or "on the basis of") as used in the present disclosure does not mean "based only on" (or "only on the basis of"), unless otherwise specified. In other words, the phrase "based on" (or "on the basis of") means both "based only on" and "based at least on" ("only on the basis of" and "at least on the basis of").

Reference to elements with designations such as "first", "second", and so on as used in the present disclosure does not generally limit the quantity or order of these elements. These designations may be used in the present disclosure only for convenience, as a method for distinguishing between two or more elements. Thus, reference to the first and second elements does not imply that only two elements may be employed, or that the first element must precede the second element in some way.

The term "deciding (determining)" as in the present disclosure herein may encompass a wide variety of actions. For example, "deciding (determining)" may be interpreted to mean making "decisions(determinations)" about judging, calculating, computing, processing, deriving, investigating, looking up, search and inquiry (for example, searching a table, a database, or some other data structures), ascertaining, and so on.

Furthermore, "deciding (determining)" may be interpreted to mean making "decisions(determinations)" about receiving (for example, receiving information), transmitting (for example, transmitting information), input, output, accessing (for example, accessing data in a memory), and so on.

In addition, "deciding (determining)" as used herein may be interpreted to mean making "decisions(determinations)" about resolving, selecting, choosing, establishing, comparing, and so on. In other words, "deciding (determining)" may be interpreted to mean making "decisions (determinations)" about some action.

"Decide/deciding (determine/determining)" may be used interchangeably with "assume/assuming", "expect/expecting", "consider/considering", and the like.

"The maximum transmit power" described in the present disclosure may mean a maximum value of the transmit power, may mean the nominal maximum transmit power (the nominal UE maximum transmit power), or may mean the rated maximum transmit power (the rated UE maximum transmit power).

The terms "connected", "coupled", or any variation of these terms as used in the present disclosure mean any direct or indirect connections or coupling between two or more elements, and may include the presence of one or more intermediate elements between two elements that are "connected" or "coupled" to each other. The coupling or connection between the elements may be physical, logical, or a combination thereof. For example, "connection" may be interpreted as "access".

In the present disclosure, when two elements are connected, the two elements may be considered "connected" or "coupled" to each other by using one or more electrical wires, cables and printed electrical connections, and, as some non-limiting and non-inclusive examples, by using electromagnetic energy having wavelengths in radio frequency regions, microwave regions, (both visible and invisible) optical regions, or the like.

In the present disclosure, the phrase "A and B are different" may mean that "A and B are different from each other". It should be noted that the phrase may mean that "A and B are each different from C". The terms "separate", "coupled", and so on may be interpreted similarly to "different".

In the case where the terms "include", "including", and variations thereof are used in the present disclosure, these terms are intended to be comprehensive, in a manner similar to the term "comprising". Furthermore, the term "or" used in the present disclosure is not intended to be an "exclusive or".

For example, in the present disclosure, where an article such as "a", "an", and "the" is added by translation, the present disclosure may include that a noun after the article is in a plural form.

In the present disclosure, "equal to or less than", "less than", "equal to or more than", "more than", "equal to", and the like may be used interchangeably. In the present disclosure, words such as "good", "bad", "large", "small", "high", "low", "early", "late", "wide", "narrow", and the like may be used interchangeably irrespective of positive degree, comparative degree, and superlative degree. In the present disclosure, expressions obtained by adding "i-th" (i is any integer) to words such as "good", "bad", "large", "small", "high", "low", "early", "late", "wide", "narrow", and the like may be used interchangeably irrespective of positive degree, comparative degree, and superlative degree (for example, "best" may be used interchangeably with "i-th best", and vice versa).

In the present disclosure, "of", "for", "regarding", "related to", "associated with", and the like may be used interchangeably.

Now, although the invention according to the present disclosure has been described in detail above, it is apparent to a person skilled in the art that the invention according to the present disclosure is by no means limited to the embodiments described in the present disclosure. Modifications, alternatives, replacements, etc., of the invention according to the present disclosure may be possible without departing from the subject matter and the scope of the present invention defined based on the descriptions of claims. The description of the present disclosure is provided only for the purpose of explaining examples, and should by no means be construed to limit the invention according to the present disclosure in any way.

## Claims

1. A terminal comprising:
a receiving section that receives downlink control information (DCI) for scheduling an uplink shared channel; and
a control section that, when a maximum length of a demodulation reference signal (DMRS) for the uplink shared channel is 1, determines a combination of five or more ports for the DMRS, based on an antenna port field of the DCI.

2. The terminal according to claim 1, wherein
when a type of the DMRS is 2 and the maximum length of the DMRS is 1, the control section determines, based on the antenna port field, a number of DMRS code division multiplexing (CDM) groups without data, from among 2 and 3.

3. A radio communication method for a terminal, the radio communication method comprising:
receiving downlink control information (DCI) for scheduling an uplink shared channel; and
determining, when a maximum length of a demodulation reference signal (DMRS) for the uplink shared channel is 1, a combination of five or more ports for the DMRS, based on an antenna port field of the DCI.

4. A base station comprising:
a transmitting section that transmits, to a terminal, downlink control information (DCI) for scheduling an uplink shared channel; and
a control section that, when a maximum length of a demodulation reference signal (DMRS) for the uplink shared channel is 1, performs control to receive the uplink shared channel, based on a combination of five or more ports for the DMRS determined based on an antenna port field of the DCI.
